# EUROPEAN PATENT APPLICATION

(11) **EP 4 192 100 A1**
(43) Date of publication of application: **07.06.2023**
(21) Application number: 20949188.5
(22) Date of filing: 14.08.2020
(51) Int. Cl.: H04W 36/00, H04W 36/08

(54) **COMMUNICATION METHOD, APPARATUS AND SYSTEM**

(71) Applicant: Huawei Technologies Co., Ltd., Shenzhen, Guangdong 518129 (CN)
(72) Inventor: GENG, Tingting, Shenzhen, Guangdong 518129 (CN); YAN, Le, Shenzhen, Guangdong 518129 (CN); OLOFSSON, Henrik, Shenzhen, Guangdong 518129 (CN)
(74) Representative: Maiwald GmbH
(86) International application number: PCT/CN2020/109376
(87) International publication number: WO 2022/032690

(57) **Abstract**

Embodiments of this application provide a communication method, apparatus, and system, to avoid inter-system unnecessary handover. The method includes: receiving first information from a first network device to which a first cell belongs, where the first cell is a first serving cell of a terminal device in a first system and/or a first RAT, and the first information includes configuration information used to determine whether inter-system and/or inter-RAT unnecessary handover occurs on the terminal device; receiving at least one first measurement result from the terminal device, where the first measurement result is a measurement result of at least one cell in a second system and/or a second RAT; and determining, based on the at least one first measurement result and all or a part of the first information, whether the inter-system and/or inter-RAT unnecessary handover occurs on the terminal device.

## Description

### TECHNICAL FIELD

This application relates to the communications field, and in particular, to a communication method, apparatus, and system.

### BACKGROUND

Existing communication systems (such as 2nd generation (2nd generation, 2G), 3rd generation (3rd generation, 3G), 4th generation (4th generation, 4G), and 5th generation (5th generation, 5G) communication systems) or a future communication system may support mobility in different systems or different RATs, for example, inter-system (inter-system) handover (handover, HO) or inter-RAT (inter-RAT) HO. Generally, a network tends to provide services for a terminal device as much as possible in a cell in a relatively new system or RAT, so that the terminal device can obtain a better network service and better experience.

A long term evolution (long term evolution, LTE) cell in a 4G system or a new radio (new radio, NR) cell in a 5G system is used as an example. The network tends to provide services for the terminal device by using the NR cell. However, due to an inappropriate parameter configuration for handover of the network device, for example, due to a reason that a measurement reporting threshold or a handover determining threshold of the NR cell that is configured by a base station in an NR system is high, but a configured measurement reporting threshold or handover determining threshold of the LTE cell is low, the base station in the NR system is prone to trigger the terminal device to be handed over from the NR cell to the LTE cell. In this case, although the terminal device is handed over to the LTE cell, quality of the NR cell may still be good. Therefore, this process may be referred to as unnecessary handover or inter-RAT unnecessary handover.

To avoid inter-system unnecessary handover, an inter-system handover identification mechanism is introduced into a standard. The identification mechanism can be used to identify inter-system unnecessary handover when the terminal device is handed over from the NR cell to the LTE cell. However, handover between different evolved NodeBs (evolved NodeBs, eNBs) is prone to occur in the LTE system. If handover between different eNBs occurs in the LTE system after the terminal device is handed over from the NR cell to the LTE cell, there is no related solution to avoid inter-system unnecessary handover currently.

### SUMMARY

Embodiments of this application provide a communication method, apparatus, and system, to avoid inter-system unnecessary handover.

To achieve the foregoing objective, the following technical solutions are used in embodiments of this application.

According to a first aspect, a communication method is provided. The method may be performed by a third network device, or may be performed by a component of the third network device, for example, a processor, a circuit, a chip, or a chip system of the third network device, or may be performed by an apparatus including the third network device. This is not specifically limited in this embodiment of this application. In this application, an example in which the third network device performs the method is used for description. The method includes: receiving first information from a first network device to which a first cell belongs, where the first cell is a first serving cell of a terminal device in a first system and/or a first RAT, and the first information includes configuration information used to determine whether inter-system and/or inter-RAT unnecessary handover occurs on the terminal device; receiving at least one first measurement result from the terminal device, where the first measurement result is a measurement result of at least one cell in a second system and/or a second RAT; and determining, based on the at least one first measurement result and all or a part of the first information, whether the inter-system and/or inter-RAT unnecessary handover occurs on the terminal device. Based on the communication method provided in this embodiment of this application, after the terminal device is handed over from the first network device to the third network device, the third network device may receive the first information from the first network device, receive the at least one first measurement result from the terminal device, and determine, based on the at least one first measurement result and all or a part of the first information, whether the inter-system and/or inter-RAT unnecessary handover occurs on the terminal device. Therefore, missing detection of the inter-system and/or inter-RAT unnecessary handover can be avoided.

In a possible implementation, the communication method provided in this embodiment of this application further includes: sending a first report if determining that the inter-system and/or inter-RAT unnecessary handover occurs on the terminal device, where the first report is an inter-system and/or inter-RAT unnecessary handover report, the first report includes identification information of a second cell, and the second cell is a serving cell of the terminal device in the second system and/or the second RAT. After determining that the inter-system and/or inter-RAT unnecessary handover occurs on the terminal device, the third network device may send the inter-system and/or inter-RAT unnecessary handover report, for example, send the inter-system and/or inter-RAT unnecessary handover report to a second network device to which the second cell belongs. Therefore, the second network device can perform analysis on a corresponding mobility problem, to properly optimize mobility parameters. This avoids the inter-system and/or inter-RAT unnecessary handover and improves user experience.

In a possible implementation, the communication method provided in this embodiment of this application further includes: receiving the identification information of the second cell from the first network device or the terminal device. Based on this solution, the third network device may learn of information about a source cell (that is, the second cell) in which handover occurs.

In a possible implementation, the first report further includes identification information of the first cell. Based on this solution, the third network device may learn of information about a target cell (that is, the first cell) in which handover occurs.

In a possible implementation, the communication method provided in this embodiment of this application further includes: receiving the identification information of the first cell from the first network device or the terminal device. In other words, in this embodiment of this application, the identification information of the first cell obtained by the third network device may be from the first network device, or may be from the terminal device. This is not specifically limited in this embodiment of this application.

In a possible implementation, the first information includes first threshold information and second measurement time information. The first threshold information indicates an inter-system and/or inter-RAT unnecessary handover determining threshold, and the second measurement time information indicates a time for measuring a cell in the second system and/or the second RAT.

In a possible implementation, the at least one first measurement result includes one or more first measurement results including a measurement result of a fourth cell. The determining, based on the at least one first measurement result and all or a part of the first information, that inter-system and/or inter-RAT unnecessary handover occurs on the terminal device includes: within a second measurement time indicated by the second measurement time information, when the measurement result of the fourth cell in the one or more first measurement results including the measurement result of the fourth cell is greater than or equal to a threshold indicated by the first threshold information, determining that the inter-system and/or inter-RAT unnecessary handover occurs on the terminal device. In this solution, by default, before the terminal device is handed over from the first network device to the third network device, the first network device has determined that the measurement result of the at least one cell in the second system and/or the second RAT within a measurement time meets the inter-system and/or inter-RAT unnecessary handover determining threshold (that is, the threshold indicated by the first threshold information). In this way, when the terminal device is handed over from the first network device to the third network device, the third network device may determine, based on the at least one first measurement result within the second measurement time indicated by the second measurement time information, that the inter-system and/or inter-RAT unnecessary handover occurs on the terminal device. In this solution, the third network device does not need to determine, when the terminal device is handed over from the second network device to the first network device, whether the measurement result that is of the at least one cell in the second system and/or the second RAT and that is reported by the terminal device meets the inter-system and/or inter-RAT unnecessary handover determining threshold (that is, the threshold indicated by the first threshold information). Therefore, processing logic of the third network device can be simplified.

In a possible implementation, the communication method provided in this embodiment of this application further includes: receiving at least one second measurement result from the first network device, where the second measurement result is the measurement result of the at least one cell in the second system and/or the second RAT, the at least one first measurement result includes one or more first measurement results including a measurement result of a fourth cell, and the at least one second measurement result includes one or more second measurement results including the measurement result of the fourth cell; and the determining, based on the at least one first measurement result and all or a part of the first information, that inter-system and/or inter-RAT unnecessary handover occurs on the terminal device includes: when the measurement result of the fourth cell in the one or more second measurement results including the measurement result of the fourth cell is greater than or equal to a threshold indicated by the first threshold information, and within a second measurement time indicated by the second measurement time information, the measurement result of the fourth cell in the one or more first measurement results including the measurement result of the fourth cell is greater than or equal to the threshold indicated by the first threshold information, determining that the inter-system and/or inter-RAT unnecessary handover occurs on the terminal device. In other words, compared with the previous implementation, in this implementation, before the terminal device is handed over from the first network device to the third network device, the first network device does not determine whether the measurement result (that is, the at least one second measurement result) of the at least one cell in the second system and/or the second RAT meets the inter-system and/or inter-RAT unnecessary handover determining threshold (that is, the threshold indicated by the first threshold information), but the third network device performs unified determining when the terminal device is handed over from the first network device to the third network device. In this case, provided that there is any cell in the second system and/or the second RAT, and all measurement results within a first measurement time are greater than or equal to the threshold indicated by the first threshold information, the third network device may determine that the inter-system and/or inter-RAT unnecessary handover occurs on the terminal device. In this solution, the first network device does not need to determine, when the terminal device is handed over from the second network device to the first network device, whether the measurement result (that is, the at least one second measurement result) that is of the at least one cell in the second system and/or the second RAT and that is reported by the terminal device meets the inter-system and/or inter-RAT unnecessary handover determining threshold (that is, the threshold indicated by the first threshold information). Therefore, processing logic of the third network device can be simplified.

In a possible implementation, the first information further includes first measurement configuration information. The first measurement configuration information is a configuration for measuring the cell in the second system and/or the second RAT. The at least one second measurement result is obtained through measurement and reported based on the first measurement configuration information. In other words, in this embodiment of this application, the terminal device may measure and report the cell in the second system and/or the second RAT based on the first measurement configuration information sent by the first network device, to obtain the at least one second measurement result.

In a possible implementation, the first information further includes the first measurement configuration information. The first measurement configuration information is the configuration for measuring the cell in the second system and/or the second RAT. The at least one first measurement result is obtained through measurement and reported based on the first measurement configuration information. The communication method provided in this embodiment of this application further includes: sending the first measurement configuration information to the terminal device. In other words, in this embodiment of this application, the terminal device may measure and report the cell in the second system and/or the second RAT based on the first measurement configuration information sent by the third network device, to obtain the at least one first measurement result.

According to a second aspect, a communication method is provided. The method may be performed by a first network device, or may be performed by a component of the first network device, for example, a processor, a circuit, a chip, or a chip system of the first network device, or may be performed by an apparatus including the first network device. This is not specifically limited in this embodiment of this application. In this application, an example in which the first network device performs the method is used for description. The method includes: receiving second information from a second network device to which a second cell belongs, where the second cell is a serving cell of a terminal device in a second system and/or a second RAT; determining first information based on the second information, where the first information includes configuration information used to determine whether inter-system and/or inter-RAT unnecessary handover occurs on the terminal device; and sending the first information to a third network device to which a third cell belongs, where the third cell is a second serving cell of the terminal device in a first system and/or a first RAT. Based on the communication method provided in this embodiment of this application, after the terminal device is handed over from the first network device to the third network device, the first network device may send the first information to the third network device, where the first information includes configuration information used to determine whether the inter-system and/or inter-RAT unnecessary handover occurs on the terminal device. Therefore, the third network device may obtain the first information. After receiving at least one first measurement result from the terminal device, the third network device may determine, based on the at least one first measurement result and all or a part of the first information, whether the inter-system and/or inter-RAT unnecessary handover occurs on the terminal device, so that missing detection of the inter-system and/or inter-RAT unnecessary handover can be avoided.

In a possible implementation, the first information includes first threshold information and second measurement time information. The first threshold information indicates an inter-system and/or inter-RAT unnecessary handover determining threshold, and the second measurement time information indicates a time for measuring a cell in the second system and/or the second RAT.

In a possible implementation, the communication method provided in this embodiment of this application further includes: receiving at least one second measurement result from the terminal device, where the second measurement result is a measurement result of at least one cell in the second system and/or the second RAT; and sending the at least one second measurement result to the third network device. In this implementation, before the terminal device is handed over from the first network device to the third network device, the first network device does not determine whether the measurement result (that is, the at least one second measurement result) of the at least one cell in the second system and/or the second RAT meets the inter-system and/or inter-RAT unnecessary handover determining threshold (that is, a threshold indicated by the first threshold information), but the third network device performs unified determining when the terminal device is handed over from the first network device to the third network device. In this case, provided that there is any cell in the second system and/or the second RAT, and all measurement results within a first measurement time are greater than or equal to the threshold indicated by the first threshold information, the third network device may determine that the inter-system and/or inter-RAT unnecessary handover occurs on the terminal device. In this solution, the first network device does not need to determine, when the terminal device is handed over from the second network device to the first network device, whether the measurement result (that is, the at least one second measurement result) that is of the at least one cell in the second system and/or the second RAT and that is reported by the terminal device meets the inter-system and/or inter-RAT unnecessary handover determining threshold (that is, the threshold indicated by the first threshold information). Therefore, processing logic of the third network device can be simplified.

In a possible implementation, the first information further includes first measurement configuration information. The first measurement configuration information is a configuration for measuring the cell in the second system and/or the second RAT. The at least one second measurement result is obtained through measurement and reported based on the first measurement configuration information. The communication method provided in this embodiment of this application further includes:
sending the first measurement configuration information to the terminal device. In other words, in this embodiment of this application, the terminal device may measure and report the cell in the second system and/or the second RAT based on the first measurement configuration information sent by the first network device, to obtain the at least one second measurement result.

In a possible implementation, the first information further includes the first measurement configuration information. The first measurement configuration information is a configuration for measuring the cell in the second system and/or the second RAT. The first measurement configuration information is used by the third network device to obtain at least one first measurement result from the terminal device, and the first measurement result is a measurement result of the at least one cell in the second system and/or the second RAT. In other words, in this embodiment of this application, the terminal device may measure and report the cell in the second system and/or the second RAT based on the first measurement configuration information sent by the third network device, to obtain the at least one first measurement result.

In a possible implementation, the communication method provided in this embodiment of this application further includes: sending measurement time information to the terminal device, where the measurement time information indicates a time for measuring the cell in the second system and/or the second RAT. In other words, in this embodiment of this application, the terminal device may maintain a measurement time for measuring the cell in the second system and/or the second RAT.

In a possible implementation, the communication method provided in this embodiment of this application further includes: sending indication information to the terminal device, where the indication information indicates the terminal device to report identification information of a first cell and/or identification information of the second cell, and the first cell is a first serving cell of the terminal device in the first system and/or the first RAT. In other words, in this embodiment of this application, the terminal device may report the identification information of the first cell and/or the identification information of the second cell, and may learn of, based on the identification information of the first cell, information about a target cell (that is, the first cell) in which handover occurs, and may learn of, based on the identification information of the second cell, information about a source cell (that is, the second cell) in which handover occurs.

According to a third aspect, a communication apparatus is provided, including a memory and at least one processor. The memory is configured to store computer instructions. When the processor executes the instructions, the communication apparatus is enabled to perform the method in any one of the foregoing aspects. The communication apparatus may be the third network device in the first aspect, or the apparatus including the third network device, or the apparatus included in the third network device, for example, a chip. Alternatively, the communication apparatus may be the first network device in the second aspect, or the apparatus including the first network device, or the apparatus included in the first network device.

According to a fourth aspect, a communication apparatus is provided, including an interface circuit and at least one processor. The interface circuit may be a code/data read and write interface circuit. The interface circuit is configured to receive computer-executable instructions (which are stored in a memory, may be read directly from the memory, or may pass through another device) and transmit the computer-executable instructions to the processor. The processor is configured to run the computer-executable instructions to perform the method according to any of the foregoing aspects. The communication apparatus may be the third network device in the first aspect, or the apparatus including the third network device, or the apparatus included in the third network device, for example, a chip. Alternatively, the communication apparatus may be the first network device in the second aspect, or the apparatus including the first network device, or the apparatus included in the first network device.

According to a fifth aspect, a communication apparatus is provided, including at least one processor. The processor is configured to: after being coupled to a memory and reading instructions in the memory, perform the method according to any one of the foregoing aspects based on the instructions. The communication apparatus may be the third network device in the first aspect, or the apparatus including the third network device, or the apparatus included in the third network device, for example, a chip. Alternatively, the communication apparatus may be the first network device in the second aspect, or the apparatus including the first network device, or the apparatus included in the first network device.

According to a sixth aspect, a computer-readable storage medium is provided. The computer-readable storage medium stores instructions. When the instructions are executed on a communication apparatus, the communication apparatus is enabled to perform the method according to any one of the foregoing aspects. The communication apparatus may be the third network device in the first aspect, or the apparatus including the third network device, or the apparatus included in the third network device, for example, a chip. Alternatively, the communication apparatus may be the first network device in the second aspect, or the apparatus including the first network device, or the apparatus included in the first network device.

According to a seventh aspect, a computer program product including instructions is provided. When the computer program product runs on a communication apparatus, the communication apparatus is enabled to perform the method according to any one of the foregoing aspects. The communication apparatus may be the third network device in the first aspect, or the apparatus including the third network device, or the apparatus included in the third network device, for example, a chip. Alternatively, the communication apparatus may be the first network device in the second aspect, or the apparatus including the first network device, or the apparatus included in the first network device.

According to an eighth aspect, a communication apparatus is provided (for example, the communication apparatus may be a chip or a chip system). The communication apparatus includes at least one processor, configured to implement functions in any one of the foregoing aspects. In a possible design, the communication apparatus further includes a memory, where the memory is configured to store necessary program instructions and/or data. When being a chip system, the communication apparatus may include a chip, or may include a chip and another discrete component.

For technical effects brought by any design manner in the third aspect to the eighth aspect, refer to technical effects brought by different design manners in the first aspect or the second aspect. Details are not described herein again.

According to a ninth aspect, a communication system is provided. The communication system includes a first network device to which a first cell belongs and a third network device to which a third cell belongs. The first cell is a first serving cell of a terminal device in a first system and/or a first RAT, and the third cell is a second serving cell of the terminal device in the first system and/or the first RAT. The first network device is configured to receive second information from a second network device to which a second cell belongs, and after determining first information based on the second information, send the first information to the third network device. The second cell is a serving cell of the terminal device in a second system and/or a second RAT. The first information includes configuration information used to determine whether inter-system and/or inter-RAT unnecessary handover occurs on the terminal device. The third network device is configured to receive the first information from the first network device, receive at least one first measurement result from the terminal device, and determine, based on the at least one first measurement result and all or a part of the first information, whether the inter-system and/or inter-RAT unnecessary handover occurs on the terminal device. The first measurement result is a measurement result of at least one cell in the second system and/or the second RAT. For technical effects brought in the ninth aspect, refer to technical effects brought in the first aspect or the second aspect. Details are not described herein again.

### BRIEF DESCRIPTION OF DRAWINGS

FIG. 1 is a schematic flowchart of an existing inter-system handover identification mechanism;
FIG. 2 is a schematic diagram of a structure of a communication system according to an embodiment of this application;
FIG. 3 is a schematic diagram of a structure of a network device according to an embodiment of this application;
FIG. 4 is a schematic diagram of a structure of another network device according to an embodiment of this application;
FIG. 5 is a schematic diagram of a structure of a terminal device, a first network device, and a third network device according to an embodiment of this application;
FIG. 6 is a schematic diagram of a structure of another terminal device according to an embodiment of this application;
FIG. 7 is a schematic flowchart of a communication method according to an embodiment of this application;
FIG. 8 is a schematic flowchart of an example of a communication method according to an embodiment of this application; and
FIG. 9 is a schematic diagram of a structure of a communication apparatus according to an embodiment of this application.

### DESCRIPTION OF EMBODIMENTS

To facilitate understanding of technical solutions in embodiments of this application, a related technology in this application is first briefly described as follows.

### 1. Inter-system and inter-RAT:

Inter-system refers to different systems, such as 2G, 3G, 4G, 5G, or future network systems. Generally, the inter-system is determined by a system to which a core network device belongs.

Inter-RAT refers to different RATs, such as 2G, 3G, 4G, 5G, or future network RATs. Generally, the inter-RAT is determined by an RAT to which an access network device belongs.

For example, an LTE base station connected to a 4G core network and an LTE base station connected to a 5G core network may be understood as belonging to different systems (inter-system) but belonging to a same RAT (intra-RAT). Further, this may be referred to as an inter-system intra-RAT (inter-system intra-RAT) scene.

For example, an LTE base station connected to a 5G core network device and an NR base station connected to the 5G core network device may be understood as belonging to a same system (intra-system) but belonging to different RATs (inter-RAT). Further, this may be referred to as an intra-system inter-RAT (intra-system inter-RAT) scene.

It should be noted that descriptions of 2G, 3G, 4G, 5G, or the like in embodiments of this application may be classified by system (for example, a 2G, 3G, 4G, 5G, or a future network system), or may be classified by RAT (for example, a 2G, 3G, 4G, 5G, or a future network RAT). This is not specifically limited in embodiments of this application. For example, although both an enhanced LTE (enhanced, eLTE) cell and an LTE cell may be considered as 4G cells, the LTE cell is connected to a 4G core network device, and the eLTE cell is connected to a 5G core network device. Therefore, it may be considered that the eLTE cell belongs to a 5G system, and the LTE cell belongs to a 4G system. Alternatively, for example, although both an eLTE cell and an NR cell are connected to a 5G core network device, a base station to which the eLTE cell belongs is an eNB, and a base station to which the NR cell belongs is a gNB. Therefore, it may be considered that the eLTE cell belongs to a 4G RAT, and the NR cell belongs to a 5G RAT.

### 2. Inter-system handover identification mechanism introduced in the standard:

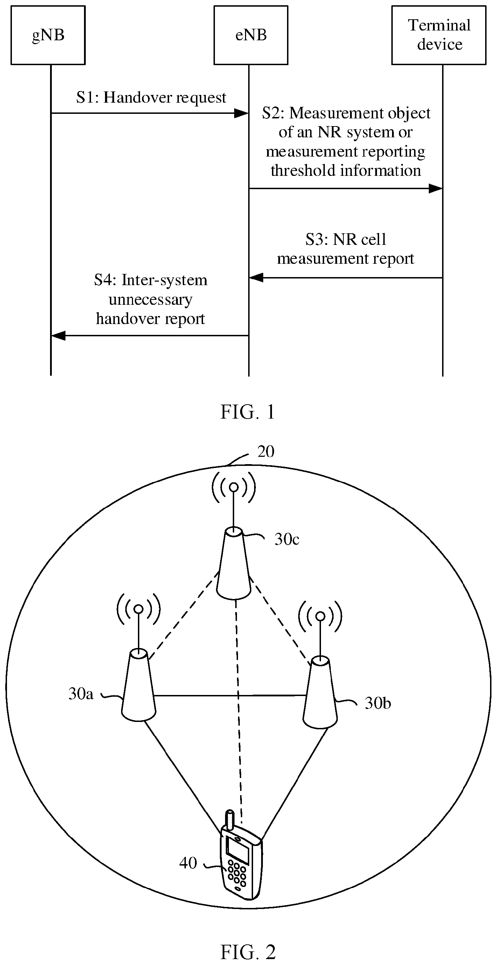

To avoid inter-system unnecessary handover, the inter-system handover identification mechanism is introduced in the standard. As shown in FIG. 1, in the identification mechanism, when a terminal device is handed over from an NR cell to an LTE cell, a next generation base station (gNodeB, gNB) of an NR system sends a handover request to an eNB of an LTE system (step S 1). The handover request includes a measurement object of the NR system, measurement reporting threshold information, measurement time information, inter-system handover determining threshold information, or the like. After the terminal device is handed over from the NR cell to the LTE cell (some procedures related to the handover from the NR cell to the LTE cell are omitted in FIG. 1), the eNB sends, to the terminal device, the measurement object, the measurement reporting threshold information, or the like of the NR system that is obtained in step S1 (step S2), so that the terminal device continues to measure the NR cell. When the terminal device measures an NR cell that meets a condition, the terminal device sends an NR cell measurement report to the eNB (step S3). The eNB determines, based on the measurement time information and the inter-system handover determining threshold information that are obtained in step S 1, whether current handover is inter-system unnecessary handover. If yes, the eNB sends an inter-system unnecessary handover report (inter-system unnecessary HO report) to the gNB (step S4), where the inter-system unnecessary handover report includes identification information of a source NR cell and identification information of a target LTE cell. In this way, the gNB may learn of information about the source NR cell and the target LTE cell in which unnecessary handover occurs. Further, the gNB may optimize handover parameters to avoid inter-system unnecessary handover.

The following describes the technical solutions in embodiments of this application with reference to accompanying drawings in embodiments of this application. In the descriptions of this application, unless otherwise specified, "/" indicates an "or" relationship between associated objects. For example, A/B may indicate A or B. In this application, "and/or" describes only an association relationship between associated objects and indicates that three relationships may exist. For example, A and/or B may indicate the following three cases: Only A exists, both A and B exist, and only B exists, where A and B may be singular or plural. In addition, in the descriptions of this application, unless otherwise specified, "at least one" means one or more, and "a plurality of" means two or more. At least one of the following items (pieces) or a similar expression thereof refers to any combination of these items, including any combination of singular items (pieces) or plural items (pieces). For example, at least one item (piece) of a, b, or c may indicate a, b, c, a-b, a-c, b-c, or a-b-c, where "-" indicates that associated objects are in an "and" relationship, and a, b, and c may be singular or plural. In addition, to clearly describe the technical solutions in embodiments of this application, terms such as "first" and "second" are used in embodiments of this application to distinguish between same items or similar items that provide basically same functions or purposes. A person skilled in the art may understand that the terms such as "first" and "second" do not limit a quantity or an execution sequence, and the terms such as "first" and "second" do not indicate a definite difference.

The technical solutions in embodiments of this application may be applied to various communication systems, for example, orthogonal frequency division multiple access (orthogonal frequency division multiple access, OFDMA), single carrier frequency division multiple access (single carrier FDMA, SC-FDMA), a non-terrestrial network (non-terrestrial network, NTN), and another system. Terms "system" and "network" may be interchanged with each other. The OFDMA system may implement wireless technologies such as evolved universal terrestrial radio access (evolved universal terrestrial radio access, E-UTRA) and ultra mobile broadband (ultra mobile broadband, UMB). The E-UTRA is an evolved release of a universal mobile telecommunications system (universal mobile telecommunications system, UMTS). A new E-UTRA version is used in LTE and various versions evolved based on LTE in the 3rd generation partnership project (3rd generation partnership project, 3GPP). The 5G communication system is a next generation communication system under research. The 5G communication system includes a 5G non-standalone (non-standalone, NSA) mobile communication system, a 5G standalone (standalone, SA) mobile communication system, or both a 5G NSA mobile communication system and a 5G SA mobile communication system. In addition, the communication system may be further applied to a future-oriented communication technology, and are all applicable to the technical solutions provided in embodiments of this application. The foregoing communication systems used in this application are merely examples for description, and are not limited thereto. Unified descriptions are provided herein and details are not described below again.

FIG. 2 is a communication system 20 according to an embodiment of this application. The communication system 20 includes a first network device 30a to which a first cell belongs and a third network device 30b to which a third cell belongs. The first cell is a first serving cell of a terminal device in a first system and/or a first RAT, and the third cell is a second serving cell of the terminal device in the first system and/or the first RAT. The first network device 30a and the third network device 30b may directly communicate with each other, or may communicate with each other through forwarding by another device. This is not specifically limited in this embodiment of this application.

Communication between the first network device 30a and the third network device 30b shown in FIG. 2 is used as an example. The first network device 30a is configured to receive second information from a second network device to which a second cell belongs, and after determining first information based on the second information, send the first information to the third network device 30b. The second cell is a serving cell of the terminal device in a second system and/or a second RAT, and the first information includes configuration information used to determine whether inter-system and/or inter-RAT unnecessary handover occurs on the terminal device 40.

The third network device 30b is configured to receive the first information from the first network device 30a, receive at least one first measurement result from the terminal device, and determine, based on the at least one first measurement result and all or a part of the first information, whether the inter-system and/or inter-RAT unnecessary handover occurs on the terminal device. The first measurement result is a measurement result of at least one cell in the second system and/or the second RAT.

Optionally, as shown in FIG. 2, the communication system 20 provided in this embodiment of this application may further include a second network device 30c to which the second cell belongs. The second network device 30c is configured to send the second information to the first network device 30a.

Optionally, the third network device 30b is further configured to send a first report to the second network device 30c if determine that the inter-system and/or inter-RAT unnecessary handover occurs on the terminal device 40. The first report is an inter-system and/or inter-RAT unnecessary handover report. The first report includes identification information of the second cell.

Optionally, as shown in FIG. 2, the communication system 20 provided in this embodiment of this application may further include the terminal device 40. The terminal device 40 is configured to: after measuring the serving cell in the second system and/or the second RAT based on the measurement configuration information, send the at least one first measurement result to the third network device 30b.

A specific implementation of the foregoing solution is described in detail in subsequent method embodiments. Details are not described herein.

It may be understood that in this embodiment of this application, the first network device 30a and the third network device 30b may be the same. In this case, the communication system provided in this embodiment of this application includes the first network device 30a and the terminal device 40, or includes the third network device 30b and the terminal device 40. This is not specifically limited in this embodiment of this application.

It may be understood that FIG. 2 is merely a schematic diagram. Although not shown, the communication system 20 may further include another device. For example, the communication system 20 may further include a core network device. A network device (for example, the first network device 30a, the third network device 30b, or the second network device 30c) may be connected to the core network device in a wireless or wired manner. The core network device and the network device may be different independent physical devices, or functions of the core network device and logical functions of the network device may be integrated into a same physical device, or some functions of the core network device and some functions of the network device may be integrated into one physical device. This is not specifically limited in this embodiment of this application.

Based on this solution, after the terminal device is handed over from the first network device to the third network device, the third network device may receive the configuration information that is used to determine whether the inter-system and/or inter-RAT unnecessary handover occurs on the terminal device and that is from the first network device, receive the at least one first measurement result from the terminal device, and determine, based on the at least one first measurement result and all or a part of the first information, whether the inter-system and/or inter-RAT unnecessary handover occurs on the terminal device. Therefore, missing detection of the inter-system and/or inter-RAT unnecessary handover can be avoided. Further, after determining that the inter-system and/or inter-RAT unnecessary handover occurs on the terminal device, the third network device may send the inter-system and/or inter-RAT unnecessary handover report to the second network device. Therefore, the second network device can perform analysis on a corresponding mobility problem, to properly optimize mobility parameters. This avoids the inter-system and/or inter-RAT unnecessary handover and improves user experience.

Optionally, the network device (including the first network device 30a, the third network device 30b, or the second network device 30c) in this embodiment of this application is a device that connects the terminal device 40 to a wireless network, which may be an eNB in LTE, a 5G access network device connected to a 4G core network device, for example, an en-gNB, a 4G access network device connected to a 5G core network device, for example, a ng-eNB, an access network device in a 5G network, for example, a gNB, or a base station in a 5G network or a future evolved public land mobile network (public land mobile network, PLMN), a broadband network service gateway (broadband network gateway, BNG), an aggregation switch, or a non-3GPP access device. This is not specifically limited in this embodiment of this application. Optionally, the base station in this embodiment of this application may include various forms of base stations, for example, a macro base station, a micro base station (also referred to as a small cell), a relay station, an access point, a gNB, a home base station (for example, a home evolved NodeB or a home NodeB, HNB), a baseband unit (baseband unit, BBU), a transmission reception point (transmission reception point, TRP), a transmitting point (transmitting point, TP), and a mobile switching center. This is not specifically limited in this embodiment of this application.

Optionally, the network device in embodiments of this application may be deployed on a high altitude platform station or a satellite. Optionally, when deployed on the high altitude platform station or the satellite, the network device may serve as a layer 1 (L1) relay (relay), or may serve as a base station, or may serve as a distributed unit (distributed unit, DU), or may serve as an integrated access and backhaul (integrated access and backhaul, IAB) node.

In a possible manner, the network device in embodiments of this application may alternatively be a central unit (central unit, CU) or a distributed unit (distributed unit, DU), or the network device may include a CU and a DU. A plurality of DUs may share one CU. One DU may alternatively be connected to a plurality of CUs. It may be understood that the base station is divided into the CU and the DU from the perspective of a logical function. The CU and the DU may be physically split, or may be deployed together. This is not specifically limited in embodiments of this application. The CU and the DU may be connected through an interface, for example, an F1 interface. The CU and the DU may be divided based on protocol layers of a wireless network. For example, functions of a radio resource control (radio resource control, RRC) protocol layer, a service data adaptation protocol (service data adaptation protocol, SDAP) protocol layer, and a packet data convergence protocol (packet data convergence protocol, PDCP) protocol layer are set in the CU, and functions of a radio link control (radio link control, RLC) protocol layer, a media access control (media access control, MAC) protocol layer, a physical (physical, PHY) protocol layer, and the like are set in the DU.

It may be understood that processing function division of the CU and the DU based on the protocol layers is merely an example, and there may be other division.

For example, the CU or the DU may have functions of more protocol layers through division. For example, the CU or the DU may alternatively have some processing functions of the protocol layers through division. In a design, some functions of the RLC layer and functions of a protocol layer above the RLC layer are distributed in the CU, and remaining functions of the RLC layer and functions of a protocol layer below the RLC layer are distributed in the DU. In another design, functions of the CU or the DU may alternatively be obtained through division based on a service type or another system requirement. For example, division is performed based on a latency, a function whose processing time needs to satisfy a latency requirement is disposed on the DU, and a function whose processing time does not need to satisfy the latency requirement is disposed on the CU. In another design, the CU may alternatively have one or more functions of the core network. One or more CUs may be centrally or separately disposed. For example, the CUs may be disposed on a network side for ease of centralized management. The DU may have a plurality of radio frequency functions, or the radio frequency functions may be disposed remotely.

Optionally, the CU may include a CU control plane (CU control plane, CU-CP) and a CU user plane (CU user plane, CU-UP). It may be understood that the CU is divided into the CU-CP and the CU-UP from a perspective of logical functions. The CU-CP and the CU-UP may be obtained through division based on a protocol layer of a wireless network. For example, a function of an RRC protocol layer and a function that is of a PDCP protocol layer and that corresponds to a signaling radio bearer (signal radio bearer, SRB) are set in the CU-CP, and a function that is of the PDCP protocol layer and that corresponds to a data radio bearer (data radio bearer, DRB) is set in the CU-UP. In addition, a function of an SDAP protocol layer may also be set in the CU-UP.

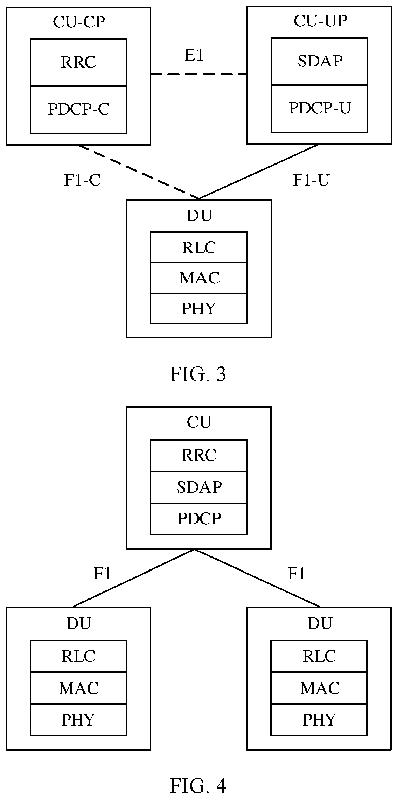

For example, the network device includes a CU and a DU, and the CU includes a CU-CP and a CU-UP. FIG. 3 is a schematic diagram of a structure of a network device according to an embodiment of this application. PDCP-C is a PDCP control plane, and PDCP-U is a PDCP user plane. F1-C is an F1 control plane interface, and F1-U is an F1 user plane interface. For example, the network device includes a CU and two DUs. FIG. 4 is a schematic diagram of a structure of another network device according to an embodiment of this application.

Optionally, the terminal device 40 in embodiments of this application may be a device, such as a terminal or a chip that can be used in the terminal, configured to implement a wireless communication function. The terminal may be user equipment (user equipment, UE), an access terminal, a terminal unit, a terminal station, a mobile station, a remote station, a remote terminal, a mobile device, a wireless communication device, a terminal agent, a terminal apparatus, or the like in the 5G network or a future evolved PLMN. The access terminal may be a cellular phone, a cordless phone, a session initiation protocol (session initiation protocol, SIP) phone, a wireless local loop (wireless local loop, WLL) station, a personal digital assistant (personal digital assistant, PDA), a handheld device or a computing device having a wireless communication function, another processing device, vehicle-mounted device, or wearable device connected to a wireless modem, a virtual reality (virtual reality, VR) terminal device, an augmented reality (augmented reality, AR) terminal device, a wireless terminal in industrial control (industrial control), a wireless terminal in self driving (self driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), or the like. The terminal may be mobile or a fixed.

Optionally, the first network device 30a, the third network device 30b, and the terminal device 40 in embodiments of this application may also be referred to as a communication apparatus, and may be a general-purpose device or a dedicated device. This is not specifically limited in embodiments of this application.

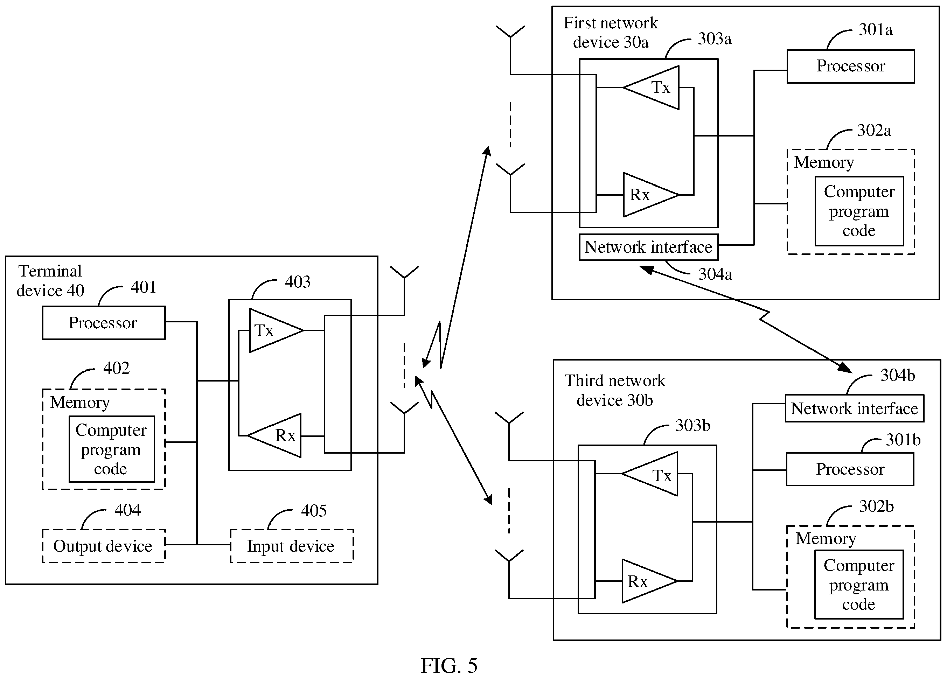

Optionally, FIG. 5 is a schematic diagram of structures of the first network device 30a, the third network device 30b, and the terminal device 40 according to an embodiment of this application.

The terminal device 40 includes at least one processor (an example in which the terminal device 40 includes one processor 401 is used for description in FIG. 5) and at least one transceiver (an example in which the terminal device 40 includes one transceiver 403 is used for description in FIG. 5). Optionally, the terminal device may further include at least one memory (where an example in which the terminal device includes one memory 402 is used for description in FIG. 5), at least one output device (where an example in which the terminal device includes one output device 404 is used for description in FIG. 5), and at least one input device (where an example in which the terminal device includes one input device 405 is used for description in FIG. 5).

The processor 401, the memory 402, and the transceiver 403 are connected to each other through a communication line. The communication line may include a path for transmitting information between the foregoing components.

The processor 401 may be a general-purpose central processing unit (central processing unit, CPU), a microprocessor, an application-specific integrated circuit (application-specific integrated circuit, ASIC), or one or more integrated circuits configured to control program execution of the solutions in this application. During specific implementation, in an embodiment, the processor 401 may alternatively include a plurality of CPUs, and the processor 401 may be a single-core (single-CPU) processor or a multi-core (multi-CPU) processor. The processor herein may be one or more devices, circuits, or processing cores configured to process data (for example, computer program instructions).

The memory 402 may be an apparatus having a storage function. For example, the memory 402 may be a read-only memory (read-only memory, ROM), another type of static storage device that can store static information and instructions, a random access memory (random access memory, RAM), or another type of dynamic storage device that can store information and instructions, or may be an electrically erasable programmable read-only memory (electrically erasable programmable read-only memory, EEPROM), a compact disc read-only memory (compact disc read-only memory, CD-ROM) or another compact disc storage, an optical disc storage (including a compact disc, a laser disc, an optical disc, a digital versatile disc, a Blu-ray disc, or the like), a magnetic storage medium or another magnetic storage device, or any other medium that can be used to carry or store expected program code in a form of an instruction or a data structure and that can be accessed by a computer. However, this is not limited thereto. The memory 402 may exist independently, and is connected to the processor 401 through the communication line. The memory 402 may alternatively be integrated with the processor 401.

The memory 402 is configured to store computer-executable instructions for performing the solutions in this application, and the processor 401 controls execution of the computer-executable instructions. Specifically, the processor 401 is configured to execute the computer-executable instructions stored in the memory 402, to implement the communication method in embodiments of this application. Optionally, the computer-executable instructions in this embodiment of this application may also be referred to as application program code or computer program code. This is not specifically limited in this embodiment of this application.

The transceiver 403 may use any apparatus such as a transceiver, and is configured to communicate with another device or a communication network such as the Ethernet, a radio access network (radio access network, RAN), or a wireless local area network (wireless local area network, WLAN). The transceiver 403 includes a transmitter (transmitter, Tx) and a receiver (receiver, Rx). The transceiver may also be an input/output interface.

The output device 404 communicates with the processor 401, and may display information in a plurality of manners. For example, the output device 404 may be a liquid crystal display (liquid crystal display, LCD), a light emitting diode (light emitting diode, LED) display device, a cathode ray tube (cathode ray tube, CRT) display device, a projector (projector), or the like.

The input device 405 communicates with the processor 401, and may receive user input in a plurality of manners. For example, the input device 405 may be a mouse, a keyboard, a touchscreen device, or a sensor device.

The first network device 30a includes one or more processors (where an example in which the first network device 30a includes one processor 301a is used for description in FIG. 5), at least one transceiver (where an example in which the first network device 30a includes one transceiver 303a is used for description in FIG. 5), and at least one network interface (where an example in which the first network device 30a includes one network interface 304a is used for description in FIG. 5).

Optionally, the first network device 30a may further include at least one memory (where an example in which the first network device 30a includes one memory 302a is used for description in FIG. 5). The processor 301a, the memory 302a, the transceiver 303a, and the network interface 304a are connected through a communication line. The network interface 304a is configured to connect to a core network device through a link (such as an S1 interface) (where the connection is not shown in FIG. 5), or connect to a network interface of another network device through a wired or wireless link (such as an X2 interface). This is not specifically limited in this embodiment of this application. In addition, for related descriptions of the processor 301a, the memory 302a, and the transceiver 303a, refer to the descriptions of the processor 401, the memory 402, and the transceiver 403 in the terminal device 40. Details are not described herein again.

The third network device 30b includes one or more processors (where an example in which the third network device 30b includes one processor 301b is used for description in FIG. 5), at least one transceiver (where an example in which the third network device 30b includes one transceiver 303b is used for description in FIG. 5), and at least one network interface (where an example in which the third network device 30b includes one network interface 304b is used for description in FIG. 5). Optionally, the second network device 30b may further include at least one memory (where an example in which the second network device 30b includes one memory 302b is used for description in FIG. 5). The processor 301b, the memory 302b, the transceiver 303b, and the network interface 304b are connected through a communication line. The network interface 304b is configured to connect to a core network device through a link (such as an S1 interface) (where the connection is not shown in FIG. 5), or connect to a network interface of another network device through a wired or wireless link (such as an X2 interface). This is not specifically limited in this embodiment of this application. In addition, for related descriptions of the processor 301b, the memory 302b, and the transceiver 303b, refer to the descriptions of the processor 401, the memory 402, and the transceiver 403 in the terminal device 40. Details are not described herein again.

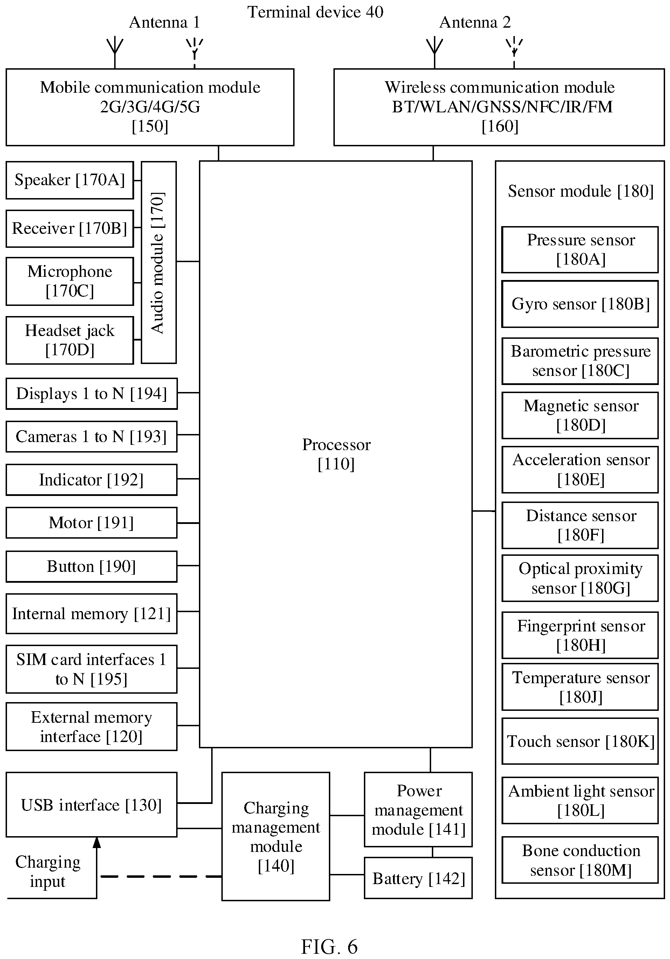

With reference to the schematic diagram of the structure of the terminal device 40 shown in FIG. 5, for example, FIG. 6 shows a specific form of a structure of a terminal device 40 according to an embodiment of this application.

In some embodiments, a function of the processor 401 in FIG. 5 may be implemented by a processor 110 in FIG. 6.

In some embodiments, a function of the transceiver 403 in FIG. 5 may be implemented by an antenna 1, an antenna 2, a mobile communication module 150, a wireless communication module 160, and the like in FIG. 6.

The antenna 1 and the antenna 2 are configured to transmit and receive electromagnetic wave signals. Each antenna in the terminal device 40 may be configured to cover one or more communication frequency bands. Different antennas may be further multiplexed, to improve antenna utilization. For example, the antenna 1 may be multiplexed as a diversity antenna of a wireless local area network. In some other embodiments, the antenna may be used in combination with a tuning switch.

The mobile communication module 150 may provide a solution used for wireless communication including 2G, 3G, 4G, 5G, and the like on the terminal device 40. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit the electromagnetic wave to the modem processor for demodulation. The mobile communication module 150 may further amplify a signal modulated by the modem processor, and convert the signal into an electromagnetic wave for radiation through the antenna 1. In some embodiments, at least some functional modules in the mobile communication module 150 may be disposed in the processor 110. In some embodiments, at least some functional modules of the mobile communication module 150 may be disposed in a same device as at least some modules of the processor 110.

The wireless communication module 160 may provide a solution used for wireless communication including a wireless local area network (wireless local area network, WLAN) (for example, a Wi-Fi network), Bluetooth (Bluetooth, BT), a global navigation satellite system (global navigation satellite system, GNSS), frequency modulation (frequency modulation, FM), near field communication (near field communication, NFC), an infrared (infrared, IR) technology, and the like on the terminal device 40. The wireless communication module 160 may be one or more components integrating at least one communication processor module. The wireless communication module 160 receives an electromagnetic wave through the antenna 2, performs frequency modulation and filtering processing on an electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 2. When the terminal device 40 is a first device, that the wireless communication module 160 may provide a solution used for NFC wireless communication on the terminal device 40 means that the first device includes an NFC chip. The NFC chip may improve an NFC wireless communication function. When the terminal device 40 is a second device, that the wireless communication module 160 may provide a solution used for NFC wireless communication on the terminal device 40 means that the first device includes an electronic label (for example, a radio frequency identification (radio frequency identification, RFID) label). When approaching the electronic label, an NFC chip of another device may perform NFC wireless communication with the second device.

In some embodiments, the antenna 1 of the terminal device 40 is coupled to the mobile communication module 150, and the antenna 2 is coupled to the wireless communication module 160, so that the terminal device 40 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), LTE, BT, a GNSS, a WLAN, NFC, FM, an IR technology, and/or the like. The GNSS may include a global positioning system (global positioning system, GPS), a global navigation satellite system (global navigation satellite system, GLONASS), a beidou navigation satellite system (beidou navigation satellite system, BDS), a quasi-zenith satellite system (quasi-zenith satellite system, QZSS), a satellite based augmentation system (satellite based augmentation system, SBAS), or another positioning system.

In some embodiments, a function of the memory 402 in FIG. 5 may be implemented by an internal memory 121, an external memory (such as a Micro SD card) connected through an external memory interface 120 in FIG. 6, or the like.

In some embodiments, a function of the output device 404 in FIG. 5 may be implemented by a display 194 in FIG. 6. The display 194 is configured to display an image, a video, and the like. The display 194 includes a display panel.

In some embodiments, a function of the input device 405 in FIG. 5 may be implemented by a mouse, a keyboard, a touchscreen device, or a sensor module 180 in FIG. 6. For example, as shown in FIG. 6, the sensor module 180 may include, for example, one or more of a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient optical sensor 180L, and a bone conduction sensor 180M. This is not specifically limited in this embodiment of this application.

In some embodiments, as shown in FIG. 6, the terminal device 40 may further include one or more of an audio module 170, a camera 193, an indicator 192, a motor 191, a key 190, a SIM card interface 195, a USB interface 130, a charging management module 140, a power management module 141, and a battery 142. The audio module 170 may be connected to a speaker 170A (which is also referred to as a "horn"), a receiver 170B (which is also referred to as an "earpiece"), a microphone 170C (which is also referred to as a "mike" or a "mic"), a headset jack 170D, or the like. This is not specifically limited in this embodiment of this application.

It may be understood that the structure shown in FIG. 6 does not constitute a specific limitation on the terminal device 40. For example, in some other embodiments of this application, the terminal device 40 may include more or fewer components than those shown in the figure, or some components may be combined, some components may be split, or the components may be differently arranged. The components shown in the figure may be implemented by hardware, software, or a combination of software and hardware.

With reference to the accompanying drawings, the following describes in detail the method provided in embodiments of this application by using interaction between the first network device 30a, the third network device 30b, and the terminal device 40 shown in FIG. 2 as an example.

It may be understood that, in embodiments of this application, the terminal device and/or the network device may perform some or all steps in embodiments of this application. These steps or operations are merely examples. In embodiments of this application, other operations or variations of various operations may be further performed. In addition, the steps may be performed in a sequence different from a sequence presented in embodiments of this application, and not all the operations in embodiments of this application may be necessarily performed.

It may be understood that, in embodiments of this application, interaction between the network device and the terminal device is also applicable to interaction between the CU and the terminal device or interaction between the DU and the terminal device. It may be understood that, in embodiments of this application, a mechanism of the interaction between the network device and the terminal device may be appropriately transformed, to be applicable to the interaction between the CU or the DU and the terminal device.

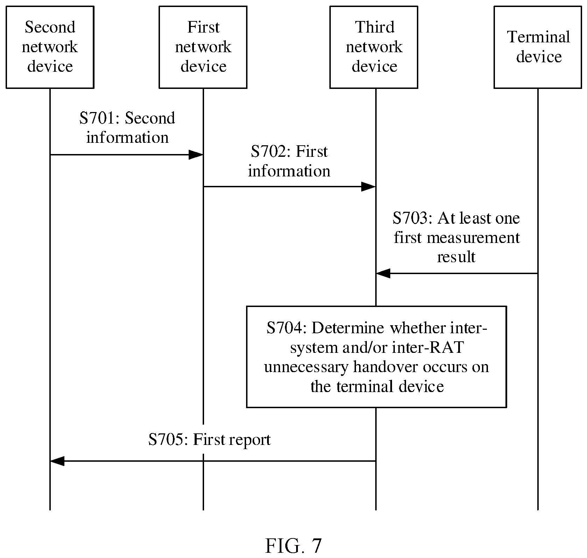

An embodiment of this application provides a communication method. The method is described by using an example in which a terminal device is handed over from a second network device to which a second cell belongs to a first network device to which a first cell belongs, and then handed over from the first network device to a third network device to which a third cell belongs. The second cell is a serving cell of the terminal device in a second system and/or a second RAT, the first cell is a first serving cell of the terminal device in a first system and/or a first RAT, and the third cell is a second serving cell of the terminal device in the first system and/or the first RAT. As shown in FIG. 7, the communication method includes the following steps.

S701: The second network device sends second information to the first network device. Correspondingly, the first network device receives the second information from the second network device.

Optionally, the second information in this embodiment of this application may include first threshold information and first measurement time information. The first threshold information indicates an inter-system and/or inter-RAT unnecessary handover determining threshold, and a first measurement time indicates a time for measuring a cell in the second system and/or the second RAT.

Optionally, the second information in this embodiment of this application may further include second measurement configuration information. The second measurement configuration information is a configuration for measuring the cell in the second system and/or the second RAT. For example, the second measurement configuration information may include, for example, at least one of the following: frequency band indication information, a subcarrier spacing, frequency information, a maximum quantity of signals used to generate cell quality, a synchronization signal/physical broadcast channel block measurement timing configuration (SS/PBCH block measurement timing configuration, SMTC), or measurement reporting threshold information. The SMTC may include at least one of a period, a length, and an offset for receiving a synchronization signal/physical broadcast channel block (synchronization signal/physical broadcast channel, SSB) by the terminal device. The measurement reporting threshold information indicates a threshold for reporting a measurement result by the terminal device.

In a possible implementation, in this embodiment of this application, the threshold indicated by the first threshold information may be the same as the threshold indicated by the measurement reporting threshold information. In this case, the second information may include the first threshold information and the measurement reporting threshold information. Alternatively, the second information includes the measurement reporting threshold information (or the first threshold information). The network device (including the first network device or the following third network device) considers by default that the threshold indicated by the measurement reporting threshold information is the threshold indicated by the first threshold information, or considers by default that the threshold indicated by the first threshold information is the threshold indicated by the measurement reporting threshold information. This is not specifically limited in this embodiment of this application.

S702: The first network device sends first information to the third network device. Correspondingly, the third network device receives the first information from the first network device. The first information includes configuration information used to determine whether inter-system and/or inter-RAT unnecessary handover occurs on the terminal device.

For example, when the first network device determines to hand over the terminal device to the third network device, the first network device may determine the first information based on the second information, and send the first information to the third network device.

Optionally, the first information in this embodiment of this application may include the first threshold information and second measurement time information. The first threshold information indicates the inter-system and/or inter-RAT unnecessary handover determining threshold, and the second measurement time information indicates a time for measuring the cell in the second system and/or the second RAT.

Optionally, the first information in this embodiment of this application may further include first measurement configuration information. The first measurement configuration information is a configuration for measuring the cell in the second system and/or the second RAT. For example, the first measurement configuration information may include, for example, at least one of the following: frequency band indication information, a subcarrier spacing, frequency information, a maximum quantity of signals used to generate cell quality, an SMTC, or measurement reporting threshold information. The SMTC may include at least one of a period, a length, and an offset for receiving an SSB by the terminal device.

Optionally, the first information in this embodiment of this application may be determined based on the second information. For example, the second measurement time information may be determined based on the first measurement time information, and the first measurement configuration information may be determined based on the second measurement configuration information. For example, a second measurement time indicated by the second measurement time information = a first measurement time indicated by the first measurement time information - a time for which the cell in the second system and/or the second RAT has been measured in the first network device. In other words, the second measurement time may also be understood as a remaining time for measuring the cell in the second system and/or the second RAT. For example, the first measurement time is 100s. The first network device configures the terminal device to measure the cell in the second system and/or the second RAT based on the second measurement configuration information. After 20s, the first network device determines to hand over the terminal device to the third network device, and the first network device may set the second measurement time to 80s. Alternatively, for example, the first measurement configuration information is the second measurement configuration information.

In another possible implementation, the first information in this embodiment of this application may not include the second measurement time information. Instead, after determining that the terminal device is handed over from the first network device to the third network device, the first network device sends the second measurement time information to the terminal device, and the terminal device maintains a second measurement time indicated by the second measurement time information. Within the second measurement time, the terminal device continues to measure the cell in the second system and/or the second RAT. The first network device and the third network device belong to a same system, or a same RAT, or a same system and RAT. Alternatively, after the first network device receives the first measurement time information from the second network device, the first network device sends the first measurement time information to the terminal device, and the terminal device maintains a first measurement time indicated by the first measurement time information. Within the first measurement time, even if the terminal device is handed over, for example, the terminal device is handed over from the first network device to a cell of the third network device, the terminal device still measures the cell in the second system and/or the second RAT. The first network device and the third network device belong to a same system, or a same RAT, or a same system and RAT. Optionally, behavior of the terminal device may be predefined in a protocol. Alternatively, the first network device sends, to the terminal device, indication information indicating to continue to measure the cell in the second system and/or the second RAT. If the terminal device is handed over from the first network device to the third network device within a specified measurement time (for example, the second measurement time or the first measurement time), the terminal device determines, based on the indication information, to continue to measure the cell in the second system and/or the second RAT. A subject that maintains the measurement time is not specifically limited in this embodiment of this application.

S703: The terminal device sends at least one first measurement result to the third network device. Correspondingly, the third network device receives the at least one first measurement result from the terminal device. The first measurement result is a measurement result of at least one cell in the second system and/or the second RAT.

In a possible implementation, the first measurement result in this embodiment of this application includes identification information of the at least one cell in the second system and/or the second RAT and a measurement value corresponding to each of the at least one cell.

In this embodiment of this application, the identification information of the cell may include at least one of a cell global identifier (cell global identifier, CGI), a physical cell identifier (physical cell identifier, PCI) and frequency, a cell identifier (cell identifier, cell ID), a non-public network identifier (non-public network identifier, NPN ID), a non-terrestrial network identifier (non-terrestrial network identifier, NTN ID), or another cell identifier of the cell. The CGI may include a public land mobile network (public land mobile network, PLMN) ID and a cell ID. Optionally, the identification information of the cell may further include a tracking area code (tracking area code, TAC) and/or identification information of a network device to which the cell belongs, for example, a global network device identifier. This is not specifically limited in this embodiment of this application. It should be noted that the foregoing descriptions of the identification information of the cell are applicable to all embodiments of this application. Unified descriptions are provided herein and details are not described below again.

In this embodiment of this application, the measurement value of the cell may include at least one of received signal code power (received signal code power, RSCP), reference signal received power (reference signal received power, RSRP), reference signal received quality (reference signal received quality, RSRQ), a signal-to-noise ratio (signal-to-noise ratio, SNR), a signal to interference plus noise ratio (signal to interference plus noise ratio, SINR), a reference signal strength indication (reference signal strength indication, RSSI), or another signal quality measurement result. The measurement value of the cell may be of at least one of a cell level, a beam level, a synchronization signal/physical broadcast channel block (synchronization signal/physical broadcast channel block, SS/PBCH Block) level, a channel state information reference signal (channel state information reference signal, CSI-RS) level, a numerology (numerology) level, a slice (slice) level, or a bandwidth part (bandwidth part, BWP) level. The measurement value of the cell may be obtained by measuring at least one of a downlink synchronization channel, a channel state information reference signal, a demodulation reference signal (demodulation reference signal, DMRS), a cell-specific reference signal (cell-specific reference signal, CRS) signal, a synchronization signal block (synchronization signal block, SSB), a synchronization signal/physical broadcast channel block, or another downlink signal. It may be understood that if the measurement value of the cell is of the beam level, the synchronization signal/physical broadcast channel block level, the numerology level, the slice level, or the bandwidth part level, the identification information of the cell may further include at least one of identification information of a corresponding beam, synchronization signal/physical broadcast channel block, channel state information reference signal, numerology, slice, or bandwidth part.

For example, if the measurement value of the cell is a measurement result of the RSRP, a unit of the measurement value may be dBm. If the measurement value of the cell is a measurement result of the RSRQ, a unit of the measurement value may be dB. In correspondence to the measurement value of the cell, a threshold for the measurement value of the cell may include at least one of an RSCP threshold, an RSRP threshold, an RSRQ threshold, an SNR threshold, an SINR threshold, an RSSI threshold, or another quality threshold.

The following provides a related example of the at least one first measurement result. It should be noted that the measurement value in the following example may be a measurement result of any one of the foregoing listed measurement objects. Different measurement objects correspond to different units of measurement values. Therefore, specific units are not provided for the following measurement values. It may be understood that, if the following measurement value is a measurement result of the RSRP, a unit of the following measurement value may be dBm. If the following measurement value is a measurement result of the RSRQ, a unit of the following measurement value may be dB.

For example, the at least one first measurement result includes a measurement result 11, a measurement result 12, and a measurement result 13.

The measurement result 11 includes: an identifier of a cell A, where a measurement value corresponding to the cell A is 5; and an identifier of a cell B, where a measurement result corresponding to the cell B is 3.

The measurement result 12 includes: the identifier of the cell A, where a measurement value corresponding to the cell A is 4.5; and an identifier of a cell C, where a measurement result corresponding to the cell C is 3.5.

The measurement result 13 includes: the identifier of the cell A, where a measurement value corresponding to the cell A is 4.5; the identifier of the cell B, where a measurement result corresponding to the cell B is 5; and the identifier of the cell C, where a measurement result corresponding to the cell C is 4.

In another possible implementation, the first measurement result in this embodiment of this application includes identification information of the at least one cell in the second system and/or the second RAT, and does not include a measurement value corresponding to each of the at least one cell. To be specific, by default, the measurement value of the at least one cell meets the threshold indicated by the measurement reporting threshold information. It may be learned, based on the identification information of the cell, that the measurement value of the cell corresponding to the identification information of the cell meets the threshold indicated by the measurement reporting threshold information. For example, when the threshold indicated by the first threshold information is the same as the threshold indicated by the measurement reporting threshold information, the first measurement result may include the identification information of the at least one cell in the second system and/or the second RAT, and does not include the measurement value corresponding to each of the at least one cell.

S704: The third network device determines, based on the at least one first measurement result and all or a part of the first information, whether inter-system and/or inter-RAT unnecessary handover occurs on the terminal device.

In a possible implementation, the terminal device sends at least one second measurement result to the first network device, where the at least one second measurement result includes one or more second measurement results including measurement results of a fourth cell. If the first network device determines, within the first measurement time (for example, 20s in the foregoing example) that elapses, that measurement results of the fourth cell are all greater than or equal to the threshold indicated by the first threshold information, the first network device may send identification information of the fourth cell to the third network device. In this way, the third network device may further receive the identification information of the fourth cell from the first network device.

Further, in step S703, the at least one first measurement result sent by the terminal device includes one or more first measurement results including the measurement results of the fourth cell. That the third network device determines, based on the at least one first measurement result and all or a part of the first information, that inter-system and/or inter-RAT unnecessary handover occurs on the terminal device includes: within the second measurement time indicated by the second measurement time information, when the measurement results of the fourth cell in the one or more first measurement results including the measurement results of the fourth cell are all greater than or equal to the threshold indicated by the first threshold information, determining that the inter-system and/or inter-RAT unnecessary handover occurs on the terminal device. To be specific, provided that in any cell (for example, the fourth cell) in the second system and/or the second RAT, measurement results within the first measurement time (for example, 20s in the foregoing example) and the second measurement time (for example, 80s in the foregoing example) that have been run are all greater than or equal to the threshold indicated by the first threshold information, the third network device may determine that the inter-system and/or inter-RAT unnecessary handover occurs on the terminal device.

Optionally, in this embodiment of this application, each of the at least one second measurement result includes the measurement result of the fourth cell, and each of the at least one first measurement result includes the measurement result of the fourth cell. In other words, in this embodiment of this application, the measurement result of the fourth cell appears in all measurement results reported within a measurement time. Unified descriptions are provided herein and details are not described below again.

For example, it is assumed that the threshold indicated by the measurement reporting threshold information is 3, the threshold indicated by the first threshold information is 4, an identifier of the fourth cell sent by the first network device to the third network device indicates the cell A, and the at least one first measurement result includes the measurement result 11, the measurement result 12, and the measurement result 13. In addition, the measurement result 11, the measurement result 12, and the measurement result 13 are all obtained within the second measurement time, and the terminal device reports the measurement result 11, the measurement result 12, and the measurement result 13 within the second measurement time. It can be learned from the measurement results that the measurement result 11, the measurement result 12, and the measurement result 13 each include a measurement result of the cell A. In addition, the measurement value (5) of the cell A in the measurement result 11, the measurement value (4.5) of the cell A in the measurement result 12, and the measurement value (4.5) of the cell A in the measurement result 13 are all greater than the threshold (4) indicated by the first threshold information. To be specific, in all measurement reports including the measurement results of the cell A within the entire second measurement time, the measurement results of the cell A are all greater than or equal to the threshold indicated by the first threshold information. Therefore, the third network device may determine that all the measurement results of the cell A within the second measurement time are greater than or equal to the threshold indicated by the first threshold information. In this way, the third network device determines that the inter-system and/or inter-RAT unnecessary handover occurs on the terminal device. Specifically, the third network device determines, within an entire measurement time (that is, a measurement time and the second measurement time in the first network device) based on identification information of the cell A and the at least one first measurement result that are received from the first network device, that all measurement results of the cell A are greater than or equal to the threshold indicated by the first threshold information. Therefore, the third network device determines that the inter-system and/or inter-RAT unnecessary handover occurs on the terminal device.

In another possible implementation, after the terminal device sends at least one second measurement result to the first network device, the first network device sends the at least one second measurement result to the third network device. In this way, the third network device may further receive the at least one second measurement result from the first network device, where the second measurement result is the measurement result of the at least one cell in the second system and/or the second RAT. The at least one first measurement result includes one or more first measurement results including measurement results of a fourth cell, and the at least one second measurement result includes one or more second measurement results including the measurement results of the fourth cell. That the third network device determines, based on the at least one first measurement result and all or a part of the first information, that inter-system and/or inter-RAT unnecessary handover occurs on the terminal device includes: when the measurement results of the fourth cell in the one or more second measurement results including the measurement results of the fourth cell are all greater than or equal to the threshold indicated by the first threshold information, and within the second measurement time indicated by the second measurement time information, the measurement results of the fourth cell in the one or more first measurement results including the measurement results of the fourth cell are all greater than or equal to the threshold indicated by the first threshold information, determining that the inter-system and/or inter-RAT unnecessary handover occurs on the terminal device. In other words, compared with the previous implementation, in this implementation, when the terminal device is handed over from the second network device to the first network device, the first network device does not determine whether the measurement result of the at least one cell in the second system and/or the second RAT meets the inter-system and/or inter-RAT unnecessary handover determining threshold (that is, the threshold indicated by the first threshold information), but the third network device performs unified determining when the terminal device is handed over from the first network device to the third network device. In this case, provided that there is any cell in the second system and/or the second RAT, and all measurement results within the first measurement time are greater than or equal to the threshold indicated by the first threshold information, the third network device may determine that the inter-system and/or inter-RAT unnecessary handover occurs on the terminal device.

For example, it is assumed that the threshold indicated by the measurement reporting threshold information is 3, the threshold indicated by the first threshold information is 4, and the at least one second measurement result includes a measurement result 21 and a measurement result 22. The measurement result 21 includes: an identifier of a cell A, where a measurement value corresponding to the cell A is 5; and an identifier of a cell B, where a measurement result corresponding to the cell B is 4.5.

The measurement result 22 includes: an identifier of a cell A, where a measurement value corresponding to the cell A is 4; and an identifier of a cell C, where a measurement result corresponding to the cell C is 3.5. The first network device receives the at least one second measurement result from the terminal device, and sends the at least one second measurement result to the third network device.

The at least one first measurement result includes the measurement result 11, the measurement result 12, and the measurement result 13. In addition, the measurement result 11, the measurement result 12, and the measurement result 13 are all obtained within the second measurement time, and the terminal device reports only the measurement result 11, the measurement result 12, and the measurement result 13 within the second measurement time. The third network device may learn, based on the measurement results, that the measurement result 21, the measurement result 22, the measurement result 11, the measurement result 12, and the measurement result 13 each include the measurement result of the cell A. In addition, the measurement value (4) of the cell A in the measurement result 22 is equal to the threshold (4) indicated by the first threshold information, and the measurement value (5) of the cell A in the measurement result 21, the measurement value (5) of the cell A in the measurement result 11, the measurement value (4.5) of the cell A in the measurement result 12, and the measurement value (4.5) of the cell A in the measurement result 13 are all greater than the threshold (4) indicated by the first threshold information. In other words, within an entire measurement time (that is, the measurement time and the second measurement time in the first network device), in all measurement reports including the measurement results of the cell A, all the measurement results of the cell A are greater than or equal to the threshold indicated by the first threshold information. Therefore, the third network device may determine that the inter-system and/or inter-RAT unnecessary handover occurs on the terminal device.

In the another possible implementation, if the third network device determines, within the second measurement time, to hand over the terminal device to the cell in the second system and/or the second RAT, the third network device may determine that the inter-system and/or inter-RAT unnecessary handover occurs on the terminal device.

In this embodiment of this application, if the third network device determines that the inter-system and/or inter-RAT unnecessary handover occurs on the terminal device, the third network device performs step S705.

S705: Optionally, the third network device sends a first report to the second network device. The first report is an inter-system and/or inter-RAT unnecessary handover report. The first report includes identification information of the second cell.

In a possible implementation, the identification information of the second cell may be sent by the first network device to the third network device. For example, in step S702, the first network device sends the identification information of the second cell to the third network device. In another possible implementation, the identification information of the second cell may alternatively be sent by the terminal device to the third network device. For example, in step S703, the terminal device sends the identification information of the second cell to the third network device. An implementation in which the third network device obtains the identification information of the second cell is not specifically limited in this embodiment of this application.

Optionally, in this embodiment of this application, the first report may further include at least one of identification information of the first cell or identification information of the third cell. The identification information of the first cell may be sent by the first network device to the third network device, or may be sent by the terminal device to the third network device, or may be determined by the third network device based on stored neighboring cell information. This is not specifically limited in this embodiment of this application. The identification information of the third cell is determined by the third network device.

Optionally, in this embodiment of this application, if an identifier of the first cell and/or an identifier of the second cell in the first report are/is sent by the terminal device to the third network device, before step S705, the communication method provided in this embodiment of this application may further include: The first network device or the third network device sends indication information to the terminal device, where the indication information indicates the terminal device to report the identification information of the first cell and/or the identification information of the second cell. This is not specifically limited in this embodiment of this application. It may be understood that if the indication information indicates the terminal device to report the identification information of the first cell and the identification information of the second cell, in a possible implementation, 1 bit is used for indication, or 2 bits are used for separate indication. This is not specifically limited in this embodiment of this application.

Optionally, in this embodiment of this application, the first report may further include the at least one first measurement result, and the at least one first measurement result may be used by the second network device to further determine whether the handover is the inter-system and/or inter-RAT unnecessary handover. This is not specifically limited in this embodiment of this application.

Optionally, in this embodiment of this application, the third network device may further send type information of the first report to the second network device. The type information of the first report indicates an encoding format of the first report. A type of the first report may be, for example, any one of the first system, the second system, the first RAT, the second RAT, the first system and the first RAT, the first system and the second RAT, the second system and the first RAT, or the second system and the second RAT. Further, the second network device may determine the encoding format of the first report based on the type information of the first report, to perform corresponding decoding. This is not specifically limited in this embodiment of this application.

Optionally, in steps S701 to S705, for interaction between any two network devices (for example, interaction between the first network device and the second network device in step S701, interaction between the first network device and the third network device in step S702, or interaction between the third network device and the second network device in step S705), when there is an interface between the two network devices, signaling or data may be directly sent by one network device to the other network device. When there is no interface between two network devices, signaling or data needs to be forwarded by using one or more core network devices. For example, step S705 is used as an example. The third network device may send the first report to a first core network device, and the first core network device sends the first report to the second network device, where the first core network device is connected to the third network device and the second network device. Alternatively, the third network device may send the first report to a second core network device, the second core network device sends the first report to a third core network device, and then the third core network device sends the first report to the second network device. The second core network device is connected to the third network device, and the third core network device is connected to the second network device. A transmission manner of signaling or data between the two network devices is not specifically limited in this embodiment of this application. In addition, the foregoing description is applicable to all embodiments of this application. Unified descriptions are provided herein and details are not described below again.

Based on the communication method provided in this embodiment of this application, after the terminal device is handed over from the first network device to the third network device, the third network device may receive the configuration information that is used to determine whether the inter-system and/or inter-RAT unnecessary handover occurs on the terminal device and that is from the first network device, receive the at least one first measurement result from the terminal device, and determine, based on the at least one first measurement result and all or a part of the first information, whether the inter-system and/or inter-RAT unnecessary handover occurs on the terminal device. Therefore, missing detection of the inter-system and/or inter-RAT unnecessary handover can be avoided. Further, after determining that the inter-system and/or inter-RAT unnecessary handover occurs on the terminal device, the third network device may send the inter-system and/or inter-RAT unnecessary handover report to the second network device. Therefore, the second network device can perform analysis on a corresponding mobility problem, to properly optimize mobility parameters (for example, increase an inter-system/inter-RAT measurement reporting threshold/handover determining threshold, and/or decrease an intra-system/intra-RAT measurement reporting threshold/handover determining threshold). This avoids the inter-system and/or inter-RAT unnecessary handover and improves user experience.

In the embodiment shown in FIG. 7, actions of the first network device may be performed by the processor 301a in the first network device 30a shown in FIG. 5 by invoking the application program code stored in the memory 302a, to instruct the first network device to perform the actions. In the embodiment shown in FIG. 7, actions of the third network device may be performed by the processor 301b in the third network device 30b shown in FIG. 5 by invoking the application program code stored in the memory 302b, to instruct the third network device to perform the actions. In the embodiment shown in FIG. 7, actions of the terminal device may be performed by the processor 401 in the terminal device 40 shown in FIG. 5 by invoking the application program code stored in the memory 402, to instruct the terminal device to perform the actions. This is not limited in this embodiment.

It should be noted that the embodiment shown in FIG. 7 is described by using an example in which the first network device is different from the third network device. Optionally, as described in the communication system 20 shown in FIG. 2, the first network device and the third network device may be the same. For example, the communication system includes the first network device. The communication method includes: The second network device sends second information to the first network device (same as step S701). The terminal device sends at least one measurement result to the first network device. After receiving the at least one measurement result from the terminal device, the first network device determines, based on the at least one measurement result and a part or all of the determined first information, whether the inter-system and/or inter-RAT unnecessary handover occurs on the terminal device. Further, optionally, if the first network device determines that the inter-system and/or inter-RAT unnecessary handover occurs on the terminal device, the first network device sends the first report to the second network device. In other words, in this case, step S702 is not performed, and the third network device in steps S703 to S705 is replaced with the first network device. Certainly, if the communication system includes the third network device, in this case, only step S701 and step S702 need to be combined into a step in which the terminal device sends the second information to the third network device. In this implementation, the third network device determines the first information based on the second information, and then performs subsequent steps S703 to S705. Unified descriptions are provided herein and details are not described below again.

In the following, in the embodiment shown in FIG. 7, an example in which the first network device is an eNB 1, the third network device 30b is an eNB2, the second network device is a gNB, the cell in the second system and/or the second RAT is an NR cell, and the cell in the first system and/or the first RAT is an LTE cell (that is, the terminal device is first handed over from the gNB to which a cell 2 belongs to the eNB 1 to which a cell 1 belongs, and then handed over from the eNB 1 to which the cell 1 belongs to the eNB2 to which a cell 3 belongs, where the cell 2 is an NR cell, and the cell 1 and the cell 3 are LTE cells) is used to describe the communication method provided in this embodiment of this application.

It should be noted that names of messages between network elements, names of parameters in the messages, or the like in the following embodiments of this application are only examples, and there may be other names in a specific implementation. This is not specifically limited in embodiments of this application.

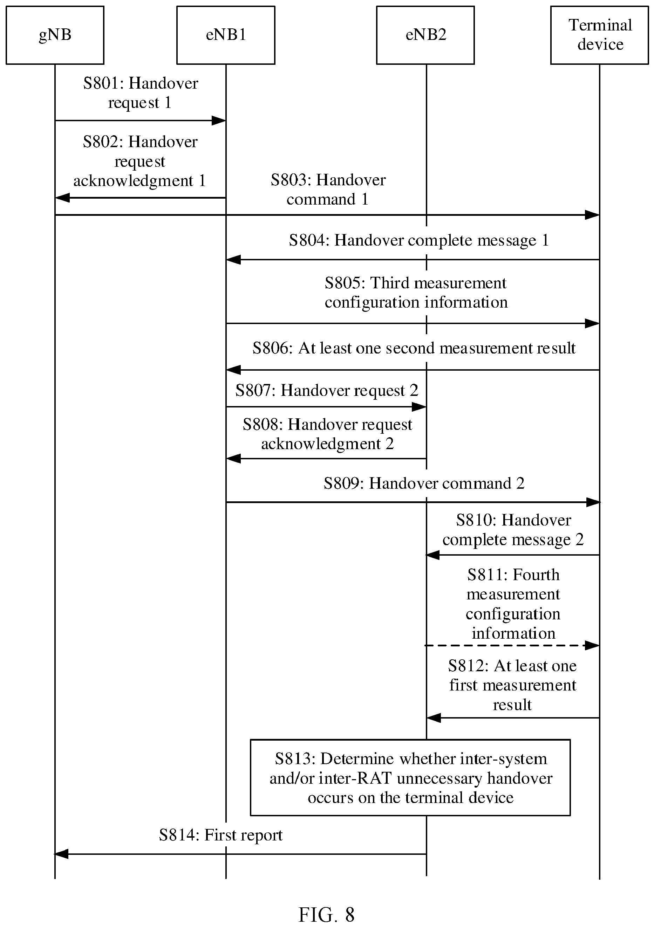

FIG. 8 shows a communication method according to an embodiment of this application. The method includes the following steps.

S801: A gNB sends a handover request 1 to an eNB 1. Correspondingly, the eNB1 receives the handover request 1 from the gNB.

The handover request 1 includes the second information in step S701 in the embodiment shown in FIG. 7. For related descriptions, refer to step S701. Details are not described herein again.

Optionally, in this embodiment of this application, the handover request 1 may further include identification information of a cell 2. Subsequently, when a terminal device is handed over from the eNB 1 to an eNB2, the eNB 1 may send the identification information of the cell 2 to the eNB2, so that after determining that inter-system and/or inter-RAT unnecessary handover occurs on the terminal device, the eNB2 may learn of, based on the identification information of the cell 2, information about a source cell in which inter-system and/or inter-RAT unnecessary handover occurs.

For example, the identification information of the cell 2 in the handover request 1 may include a PCI and a frequency. In this case, the eNB 1 may determine, based on neighboring cell information of the eNB 1, a CGI of the cell 2, a CGI and a TAC of the cell 2, or a CGI and a TAC of the cell 2 and identification information of a gNB to which the cell 2 belongs.

Alternatively, for example, the identification information of the cell 2 in the handover request 1 may include a CGI, and the eNB1 may determine, based on neighboring cell information of the eNB 1, a TAC of the cell 2, or a TAC of the cell 2 and identification information of a gNB to which the cell 2 belongs.

Alternatively, for example, the identification information of the cell 2 in the handover request 1 may include a CGI and a TAC of the cell 2, and the eNB 1 may determine, based on neighboring cell information of the eNB 1, identification information of a gNB to which the cell 2 belongs.

S802: The eNB1 sends a handover request acknowledgment 1 to the gNB. Correspondingly, the gNB receives the handover request acknowledgment 1 from the eNB1.

S803: The gNB sends a handover command 1 to the terminal device. Correspondingly, the terminal device sends the handover command 1 to the gNB.

S804: The terminal device sends a handover complete message 1 to the eNB1. Correspondingly, the eNB 1 receives the handover complete message 1 from the terminal device.

For related descriptions of steps S802 to S804, refer to the existing technology. Details are not described herein. After receiving the handover complete message 1 from the terminal device, the eNB 1 may determine that the terminal device successfully accesses the eNB1, and then continue to perform the following step S805.

S805: The eNB1 sends third measurement configuration information to the terminal device. Correspondingly, the terminal device receives the third measurement configuration information from the eNB 1.

The third measurement configuration information in this embodiment of this application is a configuration for measuring an NR cell. For example, the third measurement configuration information may include, for example, at least one of the following: frequency band indication information, a subcarrier spacing, frequency information, a maximum quantity of signals used to generate cell quality, an SMTC, and measurement reporting threshold information. The SMTC may include at least one of a period, a length, and an offset for receiving an SSB by the terminal device.

Optionally, the third measurement configuration information in this embodiment of this application may be determined based on second measurement configuration information, or the third measurement configuration information is the second measurement configuration information. This is not specifically limited in this embodiment of this application. For related descriptions of the second measurement configuration information, refer to step S701 in the embodiment shown in FIG. 7. Details are not described herein again.

In a possible implementation, in this embodiment of this application, after sending the third measurement configuration information to the terminal device, the eNB 1 may start a timer, where a value of the timer is a value indicated by first measurement time information. Certainly, the eNB1 may alternatively maintain the first measurement time in another manner. This is not specifically limited in this embodiment of this application.

In another possible implementation, the eNB1 sends indication information to the terminal device. The indication information indicates the terminal device to continue to measure the NR cell based on the third measurement configuration information after the terminal device is handed over from the eNB 1 to a cell of another LTE network device (corresponding to the eNB2 in this embodiment).

S806: The terminal device sends at least one second measurement result to the eNB 1. Correspondingly, the eNB 1 receives the at least one second measurement result from the terminal device. The second measurement result is a measurement result of at least one NR cell.

For an example of the at least one second measurement result, refer to step S704 in the embodiment shown in FIG. 7. Details are not described herein again.

S807: The eNB1 sends a handover request 2 to the eNB2. Correspondingly, the eNB2 receives the handover request 2 from the eNB 1.

The handover request 2 includes the first information in step S702 in the embodiment shown in FIG. 7. For related descriptions, refer to step S702. Details are not described herein again.

It should be noted that, this embodiment of this application is described by using an example in which the first information includes the second measurement time information.

Optionally, in this embodiment of this application, the handover request 2 may further include the at least one second measurement result received in step S803 or identification information of a cell that meets a first threshold. In a possible implementation, when measurement results of a fourth cell in one or more second measurement results including the measurement results of the fourth cell are all greater than or equal to a threshold indicated by first threshold information, the handover request 2 may further include the at least one second measurement result received in step S803 or the identification information of the fourth cell. This is not specifically limited in this embodiment of this application.

Optionally, the handover request 2 in this embodiment of this application may further include the identification information of the cell 2. The identification information of the cell 2 is used by the eNB2 to determine a sending target of an inter-system and/or inter-RAT unnecessary handover report (that is, the first report in the embodiment shown in FIG. 7). In addition, the identification information of the cell 2 is also used by the eNB2 to determine identification information of a source cell in an inter-system and/or inter-RAT unnecessary handover report (that is, the first report in the embodiment shown in FIG. 7). In an example, the identification information of the cell 2 included in the handover request 2 is the CGI of the cell 2. Optionally, the handover request 2 may further include the TAC of the cell 2 and/or the identification information of the gNB to which the cell 2 belongs.

Optionally, the handover request 2 in this embodiment of this application may further include identification information of the cell 1. The identification information of the cell 1 may be used by the eNB2 to determine identification information of a target cell in an inter-system and/or inter-RAT unnecessary handover report (that is, the first report in the embodiment shown in FIG. 7).

S808: The eNB2 sends a handover request acknowledgment 2 to the eNB 1. Correspondingly, the eNB1 receives the handover request acknowledgment 2 from the eNB2.

In this embodiment of this application, an example in which there is an Xn interface between the eNB 1 and the eNB2 is used to describe a handover procedure (that is, step S804 and step S805). It may be understood that, if there is no Xn interface between the eNB 1 and the eNB2, the handover procedure between the eNB 1 and the eNB2 may be performed by using a core network device. Correspondingly, a related parameter in the handover procedure also needs to be transmitted by using the core network device. Unified descriptions are provided herein and details are not described below again.

S809: The eNB1 sends a handover command 2 to the terminal device. Correspondingly, the terminal device receives the handover command 2 from the eNB 1.

In a possible implementation, the handover command 2 may include fifth measurement configuration information. The fifth measurement configuration information is a configuration for measuring the NR cell. For example, the fifth measurement configuration information may include, for example, at least one of the following: frequency band indication information, a subcarrier spacing, frequency information, a maximum quantity of signals used to generate cell quality, an SMTC, and measurement reporting threshold information. The SMTC may include at least one of a period, a length, and an offset for receiving an SSB by the terminal device.

Optionally, the fifth measurement configuration information in this embodiment of this application may be determined based on second measurement configuration information, or the fifth measurement configuration information is the second measurement configuration information. This is not specifically limited in this embodiment of this application. For related descriptions of the second measurement configuration information, refer to step S701 in the embodiment shown in FIG. 7. Details are not described herein again.

In another possible implementation, the handover command 2 may include indication information 1 and the fifth measurement configuration information. The indication information 1 indicates the terminal device to continue to measure the NR cell based on the fifth measurement configuration information after being handed over from the first network device (corresponding to the eNB 1 in this embodiment) to another LTE network device (corresponding to the eNB2 in this embodiment).

In still another possible implementation, the handover command 2 does not include the fifth measurement configuration information but includes indication information 3. The indication information 3 indicates the terminal device to continue to measure the NR cell based on corresponding measurement configuration information (for example, the third measurement configuration information or the following fourth measurement configuration information) after being handed over from the first network device (corresponding to the eNB 1 in this embodiment) to another LTE network device (corresponding to the eNB2 in this embodiment).

Optionally, a behavior of continuing to measure the NR cell after the terminal device is handed over to the LTE network device may be predefined in a protocol. For example, the eNB 1 sends measurement configuration information (for example, the third measurement configuration information or the fifth configuration information) to the terminal device. After being handed over to a cell in another LTE network device, the terminal device continues to measure the NR cell based on the measurement configuration information. When the terminal device receives indication information indicating to stop or release measurement of the NR cell, the terminal device stops measuring the NR cell.

S810: The terminal device sends a handover complete message 2 to the eNB2. Correspondingly, the eNB2 receives the handover complete message 2 from the terminal device.

After receiving the handover complete message 1 from the terminal device, the eNB2 may determine that the terminal device successfully accesses the eNB2. Further, optionally, the communication method provided in this embodiment of this application further includes step S811.

S811: The eNB2 sends the fourth measurement configuration information to the terminal device. Correspondingly, the terminal device receives the fourth measurement configuration information from the eNB 1.

The fourth measurement configuration information in this embodiment of this application is a configuration for measuring the NR cell. For example, the fourth measurement configuration information may include, for example, at least one of the following: frequency band indication information, a subcarrier spacing, frequency information, a maximum quantity of signals used to generate cell quality, an SMTC, and measurement reporting threshold information. The SMTC may include at least one of a period, a length, and an offset for receiving an SSB by the terminal device.

Optionally, the fourth measurement configuration information in this embodiment of this application may be determined based on the first measurement configuration information obtained by the eNB2 in the handover request 2 in step S807, or the fourth measurement configuration information is the first measurement configuration information. This is not specifically limited in this embodiment of this application. To be specific, in this embodiment of this application, after the eNB2 obtains the first measurement configuration information, and after the terminal device successfully accesses the eNB2, the eNB2 may further send the fourth measurement configuration information to the terminal device. For related descriptions of the first measurement configuration information, refer to step S702 in the embodiment shown in FIG. 7. Details are not described herein again.

It should be noted that, in this embodiment of this application, if the terminal device may inherit the third measurement configuration information obtained in step S805, or if the terminal device may inherit the fifth measurement configuration information obtained in step S809, step S811 may not be performed in this embodiment of this application. Unified descriptions are provided herein and details are not described below again.

Optionally, a behavior of continuing to measure the NR cell after the terminal device is handed over to the LTE network device may be predefined in a protocol. For example, after the terminal device successfully accesses the eNB 1, the eNB 1 may send first measurement time information to the terminal device. In this case, if the terminal device is handed over from the eNB 1 to a cell of another LTE network device within a first measurement time indicated by the first measurement time information, the terminal device determines to continue to measure the NR cell. Alternatively, for example, the protocol predefines that after being handed over to a cell of another LTE network device, the terminal device continues to measure the NR cell based on the measurement configuration information (for example, the third measurement configuration information or the fifth configuration information) sent by the eNB 1. When the terminal device receives indication information indicating to stop or release measurement of the NR cell or receives another measurement configuration, the terminal device stops measuring the NR cell or measures the NR cell based on the another measurement configuration. Alternatively, for example, the handover command 2 sent by the eNB 1 to the terminal device carries the second measurement time information. After being handed over to another LTE network device, the terminal device continues to measure the NR cell within a second measurement time indicated by the second measurement time information.

S812: The terminal device sends at least one first measurement result to the eNB2. Correspondingly, the eNB2 receives the at least one first measurement result from the terminal device. The first measurement result is a measurement result of at least one NR cell.

For an example of the at least one first measurement result, refer to step S703 in the embodiment shown in FIG. 7. Details are not described herein again.

In a possible implementation, the at least one first measurement result may be obtained by the terminal device through measurement based on the fifth measurement configuration information in the handover command 2 in step S809.

In another possible implementation, the at least one first measurement result may be obtained by the terminal device through measurement based on the third measurement configuration information in step S805.

In still another possible implementation, the at least one first measurement result may be obtained by the terminal device through measurement based on the fourth measurement configuration information in step S811.

Specifically, the terminal device performs measurement based on a latest measurement configuration sent by the eNB 1 and/or the eNB2 to the terminal device in this embodiment of this application. In this embodiment of this application, which measurement configuration information is used to measure the at least one first measurement result is not specifically limited.

S813: The eNB2 determines, based on the at least one first measurement result and all or a part of the first information, whether the inter-system and/or inter-RAT unnecessary handover occurs on the terminal device.

For a specific implementation of step S808, refer to step S704 in the embodiment shown in FIG. 7. Details are not described herein again.

If the eNB2 determines that the inter-system and/or inter-RAT unnecessary handover occurs on the terminal device, the eNB2 performs step S809.

S814: Optionally, the eNB2 sends a first report to the gNB. Correspondingly, the gNB receives the first report from the eNB2.

The first report includes the identification information of the cell 2. Optionally, the identification information of the cell 1 and/or identification information of a cell 3 are included.

In a possible implementation, the handover request 2 in the step S807 includes the identification information of the cell 2 and/or the identification information of the cell 1. In another possible implementation, the eNB 1 or the eNB2 may alternatively send indication information 2 to the terminal device. The indication information 2 indicates the terminal device to report the identification information of the cell 1 and/or the identification information of the cell 2. Alternatively, the indication information 2 indicates the terminal device to report the identification information of the cell 1 and/or the identification information of the cell 2 after handover occurs on the terminal device. This is not specifically limited in this embodiment of this application. After obtaining the indication information 2, the terminal device may send the identification information of the cell 2 and/or the identification information of the cell 1 to the eNB2 based on the indication information 2.

Optionally, the indication information 2 may be included in the handover command 2 in step S809; or the indication information 2 may be included in the third measurement configuration information in step S805; or the indication information 2 may be included in the fourth measurement configuration information; or the indication information 2 may be sent by the eNB 1 or the eNB2 to the terminal device on another occasion. This is not specifically limited in this embodiment of this application.

Optionally, in this embodiment of this application, the first report may further include the at least one first measurement result. For related descriptions, refer to step S705 in the embodiment shown in FIG. 7. Details are not described herein again.

Optionally, in this embodiment of this application, the eNB2 may further send type information of the first report to the gNB. The type information of the first report indicates an encoding format of the first report. A type of the first report may be a type of pure 5G (for example, an NR or a gNB), 4G (for example, eLTE or a ng-eNB) connected to a 5G core network, pure 4G (for example, LTE or an eNB), or another system or RAT. In an example, the type of the first report may indicate either an NR encoding format or an LTE encoding format. Further, the gNB may determine the encoding format of the first report based on the type information of the first report, to perform corresponding decoding. This is not specifically limited in this embodiment of this application.

As described in the embodiment shown in FIG. 7, for interaction between any two network devices, when there is an interface between the two network devices, signaling or data may be directly sent by one network device to the other network device. When there is no interface between two network devices, signaling or data needs to be forwarded by using one or more core network devices. In this embodiment of this application, the eNB2 may send the first report to the gNB by using the following messages on an X2 interface or an Xn interface: a failure indication (FAILURE INDICATION, RLF INDICATION) message, a handover report (HANDOVER REPORT) message, or another message. Alternatively, the eNB2 may send the first report to the gNB by using at least one of the following messages on an S1/NG interface and by using one or more core network devices: an uplink RAN configuration transfer (UPLINK RAN CONFIGURATION TRANSFER) message, a downlink RAN configuration transfer (DOWNLINK RAN CONFIGURATION TRANSFER) message, a base station configuration transfer (eNB CONFIGURATION TRANSFER) message, a core network device configuration transfer (MME CONFIGURATION TRANSFER) message, or another message. It may be understood that, in this embodiment of this application, a message between network devices is described only from a function perspective. When there is no interface between two network devices, content of the message may be properly changed. Unified descriptions are provided herein and details are not described below again.

Based on the communication method provided in this embodiment of this application, after the terminal device is handed over from the eNB 1 to the eNB2, the eNB2 may receive configuration information that is used to determine whether the inter-system and/or inter-RAT unnecessary handover occurs on the terminal device and that is from the eNB 1, receive the at least one first measurement result from the terminal device, and determine, based on the at least one first measurement result and all or a part of the first information, whether the inter-system and/or inter-RAT unnecessary handover occurs on the terminal device. Therefore, missing detection of the inter-system and/or inter-RAT unnecessary handover can be avoided. Further, after determining that the inter-system and/or inter-RAT unnecessary handover occurs on the terminal device, the eNB2 may send an inter-system and/or inter-RAT unnecessary handover report to the gNB. Therefore, the gNB can perform analysis on a corresponding mobility problem, to properly optimize mobility parameters. This avoids the inter-system and/or inter-RAT unnecessary handover and improves user experience.

In the embodiment shown in FIG. 8, actions of the eNB 1 may be performed by the processor 301a in the first network device 30a shown in FIG. 5 by invoking the application program code stored in the memory 302a, to instruct the first network device to perform the actions. In the embodiment shown in FIG. 7, actions of the eNB2 may be performed by the processor 301b in the third network device 30b shown in FIG. 5 by invoking the application program code stored in the memory 302b, to instruct the third network device to perform the actions. In the embodiment shown in FIG. 7, actions of the terminal device may be performed by the processor 401 in the terminal device 40 shown in FIG. 5 by invoking the application program code stored in the memory 402, to instruct the terminal device to perform the actions. This is not limited in this embodiment.

The embodiment shown in FIG. 8 is described by using an example in which the first information includes the second measurement time information. Optionally, an embodiment of this application may further provide a communication method. The communication method is similar to that in the embodiment shown in FIG. 8. A difference lies in that the first information may not include the second measurement time information, but the terminal device maintains a measurement time.

In a possible implementation, in step S805, the third measurement configuration information sent by the eNB 1 to the terminal device may further include the first measurement time information in step S701. After obtaining the first measurement time information, the terminal device may start a timer. A value of the timer is a value indicated by the first measurement time information. Certainly, the terminal device may alternatively maintain the first measurement time in another manner. This is not specifically limited in this embodiment of this application.

In another possible implementation, the handover command 2 in step S809 may include the second measurement time information. After obtaining the second measurement time information, the terminal device may start a timer. A value of the timer is a value indicated by the second measurement time information. Certainly, the terminal device may alternatively maintain the second measurement time in another manner. This is not specifically limited in this embodiment of this application.

It should be noted that FIG. 8 is merely an example description of the embodiment shown in FIG. 7. In another scenario, the first network device, the second network device, and the third network device may be other devices. For example, the second network device may be a 6G network device, and the first network device and the third network device may be 5G network devices. Unified descriptions are provided herein and details are not described below again.

In embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

It may be understood that, in the foregoing embodiments, the methods and/or the steps implemented by the terminal device may alternatively be implemented by a component (for example, a chip or a circuit) that can be used in the terminal device, and the methods and/or the steps implemented by the network device (including the first network device, the second network device, or the third network device) may alternatively be implemented by a component (for example, a chip or a circuit) that can be used in the network device.

The foregoing mainly describes the solutions provided in embodiments of this application from the perspective of interaction between network elements. Correspondingly, an embodiment of this application further provides a communication apparatus, and the communication apparatus is configured to implement the foregoing methods. The communication apparatus may be the terminal device in the foregoing method embodiment, or an apparatus including the foregoing terminal device, or a component that can be used in the terminal device. Alternatively, the communication apparatus may be the network device (including the first network device, the second network device, or the third network device) in the foregoing method embodiments, or an apparatus including the foregoing network device, or may be a component that can be used in the network device. It may be understood that, to implement the foregoing functions, the communication apparatus includes a hardware structure and/or a software module for performing a corresponding function. A person skilled in the art should easily be aware that, in combination with units and algorithm steps of the examples described in embodiments disclosed in this specification, this application may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the communication apparatus may be divided into functional modules based on the foregoing method embodiment. For example, each functional module may be obtained through division based on each corresponding function, or two or more functions may be integrated into one processing module. The integrated module may be implemented in a form of hardware, or may be implemented in a form of a software functional module. It should be noted that, in embodiments of this application, division into the modules is an example and is merely logical function division, or may be other division during actual implementation.

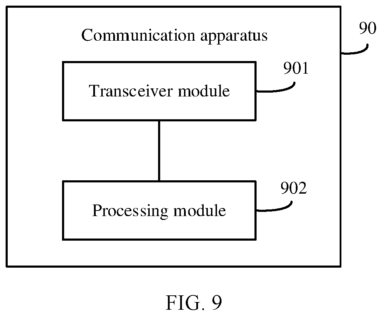

FIG. 9 is a schematic diagram of a structure of a communication apparatus 90. The communication apparatus 90 includes a transceiver module 901 and a processing module 902. The transceiver module 901 may also be referred to as a transceiver unit, and is configured to implement a transceiver function. For example, the transceiver module 901 may be a transceiver circuit, a transceiver machine, a transceiver, or a communication interface.

For example, the communication apparatus 90 is the third network device in the foregoing method embodiments, or may be a chip or another component disposed in the third network device.

In a possible implementation, the transceiver module 901 is configured to receive first information from a first network device to which a first cell belongs, where the first cell is a first serving cell of a terminal device in a first system and/or a first RAT, and the first information includes configuration information used to determine whether inter-system and/or inter-RAT unnecessary handover occurs on the terminal device. The transceiver module 901 is further configured to receive at least one first measurement result from the terminal device, where the first measurement result is a measurement result of at least one cell in a second system and/or a second RAT. The processing module 902 is configured to determine, based on the at least one first measurement result and all or a part of the first information, whether the inter-system and/or inter-RAT unnecessary handover occurs on the terminal device.

Optionally, the transceiver module 901 is further configured to send a first report if determining that the inter-system and/or inter-RAT unnecessary handover occurs on the terminal device, where the first report is an inter-system and/or inter-RAT unnecessary handover report, the first report includes identification information of a second cell, and the second cell is a serving cell of the terminal device in the second system and/or the second RAT.

Optionally, the transceiver module 901 is further configured to receive the identification information of the second cell from the first network device or the terminal device.

Optionally, the first report further includes identification information of the first cell.

Optionally, the transceiver module 901 is further configured to receive the identification information of the first cell from the first network device or the terminal device.

Optionally, the first information includes first threshold information and second measurement time information. The first threshold information indicates an inter-system and/or inter-RAT unnecessary handover determining threshold, and the second measurement time information indicates a time for measuring a cell in the second system and/or the second RAT.

Optionally, the at least one first measurement result includes one or more first measurement results including a measurement result of a fourth cell. The processing module 902 is specifically configured to: within a second measurement time indicated by the second measurement time information, when the measurement result of the fourth cell in the one or more first measurement results including the measurement result of the fourth cell is greater than or equal to a threshold indicated by the first threshold information, determine that the inter-system and/or inter-RAT unnecessary handover occurs on the terminal device.

Optionally, the transceiver module 901 is further configured to receive at least one second measurement result from the first network device, where the second measurement result is the measurement result of the at least one cell in the second system and/or the second RAT, the at least one first measurement result includes one or more first measurement results including a measurement result of a fourth cell, and the at least one second measurement result includes one or more second measurement results including the measurement result of the fourth cell. The processing module is specifically configured to: when the measurement result of the fourth cell in the one or more second measurement results including the measurement result of the fourth cell is greater than or equal to a threshold indicated by the first threshold information, and within a second measurement time indicated by the second measurement time information, the measurement result of the fourth cell in the one or more first measurement results including the measurement result of the fourth cell is greater than or equal to the threshold indicated by the first threshold information, determine that the inter-system and/or inter-RAT unnecessary handover occurs on the terminal device.

Optionally, the first information further includes first measurement configuration information. The first measurement configuration information is a configuration for measuring a cell in the second system and/or the second RAT. The at least one second measurement result is obtained through measurement and reported based on the first measurement configuration information.

Optionally, the first information further includes the first measurement configuration information. The first measurement configuration information is a configuration for measuring the cell in the second system and/or the second RAT. The at least one first measurement result is obtained through measurement and reported based on the first measurement configuration information. The transceiver module 901 is further configured to send the first measurement configuration information to the terminal device.

For example, the communication apparatus 90 is the first network device in the foregoing method embodiments, or may be a chip or another component disposed in the first network device.

In a possible implementation, the transceiver module 901 is configured to receive second information from a second network device to which a second cell belongs, where the second cell is a serving cell of a terminal device in a second system and/or a second RAT. The processing module 902 is configured to determine first information based on the second information, where the first information includes configuration information used to determine whether inter-system and/or inter-RAT unnecessary handover occurs on the terminal device. The transceiver module 901 is further configured to send the first information to a third network device to which a third cell belongs, where the third cell is a second serving cell of the terminal device in a first system and/or a first RAT.

Optionally, the first information includes first threshold information and second measurement time information. The first threshold information indicates an inter-system and/or inter-RAT unnecessary handover determining threshold, and the second measurement time information indicates a time for measuring a cell in the second system and/or the second RAT.

Optionally, the transceiver module 901 is further configured to receive at least one second measurement result from the terminal device, where the second measurement result is a measurement result of at least one cell in the second system and/or the second RAT. The transceiver module 901 is further configured to send the at least one second measurement result to the third network device.

Optionally, the first information further includes first measurement configuration information. The first measurement configuration information is a configuration for measuring the cell in the second system and/or the second RAT. The at least one second measurement result is obtained through measurement and reported based on the first measurement configuration information. The transceiver module 901 is further configured to send the first measurement configuration information to the terminal device.

Optionally, the first information further includes the first measurement configuration information. The first measurement configuration information is the configuration for measuring the cell in the second system and/or the second RAT. The first measurement configuration information is used by the third network device to obtain at least one first measurement result from the terminal device, and the first measurement result is the measurement result of the at least one cell in the second system and/or the second RAT.

Optionally, the transceiver module 901 is further configured to send measurement time information to the terminal device, where the measurement time information indicates a time for measuring the cell in the second system and/or the second RAT.

Optionally, the transceiver module 901 is further configured to send indication information to the terminal device, where the indication information indicates the terminal device to report identification information of a first cell and/or identification information of the second cell, and the first cell is a first serving cell of the terminal device in the first system and/or the first RAT.

All related content of the steps in the foregoing method embodiments may be cited in function descriptions of the corresponding functional modules. Details are not described herein again.

Optionally, the communication apparatus 90 may further include a storage module (not shown in FIG. 9), configured to store data and/or instructions. The processing module 902 may read the data or the instructions in the storage module, to implement the method corresponding to the foregoing embodiments.

It may be understood that the foregoing modules may be independently disposed, or may be integrated. This is not limited in this embodiment of this application. In this embodiment, the communication apparatus 90 is presented in a form of functional modules obtained through division in an integrated manner. The "module" herein may be a specific ASIC, a circuit, a processor that executes one or more software or firmware programs, a memory, an integrated logic circuit, and/or another component capable of providing the foregoing functions. In a simple embodiment, a person skilled in the art may figure out that the communication apparatus 90 may be in a form of the first network device 30a or the second network device 30b shown in FIG. 5.

For example, the communication apparatus 90 is the first network device in the foregoing method embodiment, or a chip or another component disposed in the first network device. The processor 301a in the first network device 30a shown in FIG. 5 may invoke the computer-executable instructions stored in the memory 302a, so that the first network device 30a performs the method performed by the first network device in the foregoing method embodiments.

Specifically, functions/implementation processes of the transceiver module 901 and the processing module 902 in FIG. 9 may be implemented by the processor 301a in the first network device 30a shown in FIG. 5 by invoking the computer-executable instructions stored in the memory 302a. Alternatively, functions/implementation processes of the processing module 902 in FIG. 9 may be implemented by the processor 301a in the first network device 30a shown in FIG. 5 by invoking the computer-executable instructions stored in the memory 302a. The functions/implementation processes of the transceiver module 901 in FIG. 9 may be implemented by using the transceiver 303a in the first network device 30a shown in FIG. 5.

For example, the communication apparatus 90 is the third network device in the foregoing method embodiment, or a chip or another component disposed in the third network device. The processor 301b in the third network device 30b shown in FIG. 5 may invoke the computer-executable instructions stored in the memory 302b, so that the third network device 30b performs the method performed by the third network device in the foregoing method embodiments.

Specifically, functions/implementation processes of the transceiver module 901 and the processing module 902 in FIG. 9 may be implemented by the processor 301b in the third network device 30b shown in FIG. 5 by invoking the computer-executable instructions stored in the memory 302b. Alternatively, functions/implementation processes of the processing module 902 in FIG. 9 may be implemented by the processor 301b in the third network device 30b shown in FIG. 5 by invoking the computer-executable instructions stored in the memory 302b. Functions/implementation processes of the transceiver module 901 in FIG. 9 may be implemented by using the transceiver 303b in the third network device 30b shown in FIG. 5.

The communication apparatus 90 provided in this embodiment can perform the foregoing communication method. Therefore, for technical effects that can be achieved by the communication apparatus 90, refer to the foregoing method embodiments. Details are not described herein again.

It should be noted that one or more of the foregoing modules or units may be implemented by software, hardware, or a combination thereof. When any one of the foregoing modules or units is implemented by software, the software exists in a form of a computer program instruction, and is stored in the memory. The processor may be configured to execute the program instructions and implement the foregoing method procedure. The processor may be built into a SoC (system-on-a-chip) or an ASIC, or may be an independent semiconductor chip. In addition to a core for executing software instructions to perform operations or processing, the processor may further include a necessary hardware accelerator, for example, a field programmable gate array (field programmable gate array, FPGA), a PLD (programmable logic device), or a logic circuit that implements a special-purpose logic operation.

When the foregoing modules or units are implemented by using hardware, the hardware may be any one or any combination of a CPU, a microprocessor, a digital signal processing (digital signal processing, DSP) chip, a microcontroller unit (microcontroller unit, MCU), an artificial intelligence processor, an ASIC, a SoC, an FPGA, a PLD, a dedicated digital circuit, a hardware accelerator, or a non-integrated discrete device, and the hardware may run necessary software or does not depend on software to perform the foregoing method procedures.

Optionally, an embodiment of this application further provides a communication apparatus (for example, the communication apparatus may be a chip or a chip system). The communication apparatus includes a processor, configured to implement the method in any one of the foregoing method embodiments. In a possible implementation, the communication apparatus further includes a memory. The memory is configured to store necessary program instructions and necessary data. The processor may invoke program code stored in the memory, to indicate the communication apparatus to perform the method in any one of the foregoing method embodiments. Certainly, the memory may not be in the communication apparatus. When being a chip system, the communication apparatus may include a chip, or may include a chip and another discrete component. This is not specifically limited in this embodiment of this application.

All or some of the foregoing embodiments may be implemented using software, hardware, firmware, or any combination thereof. When a software program is used to implement embodiments, the embodiments may be implemented completely or partially in a form of a computer program product. The computer program product includes one or more computer instructions. When the computer program instructions are loaded and executed on a computer, the procedures or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid state disk (solid state disk, SSD)), or the like.

Although this application is described with reference to embodiments, in a process of implementing this application that claims protection, a person skilled in the art may understand and implement another variation of the disclosed embodiments by viewing the accompanying drawings, disclosed content, and appended claims. In the claims, "comprising" (comprising) does not exclude another component or another step, and "a" or "one" does not exclude a case of multiple. A single processor or another unit may implement several functions enumerated in the claims. Some measures are recorded in dependent claims that are different from each other, but this does not mean that these measures cannot be combined to produce a better effect.

Although this application is described with reference to specific features and embodiments thereof, it is clear that various modifications and combinations may be made to them without departing from the spirit and scope of this application. Correspondingly, the specification and accompanying drawings are merely example description of this application defined by the appended claims, and are considered as any of or all modifications, variations, combinations or equivalents that cover the scope of this application. It is clear that a person skilled in the art can make various modifications and variations to this application without departing from the spirit and scope of this application. This application is intended to cover these modifications and variations of this application provided that they fall within the scope of the claims of this application and equivalent technologies thereof.

## Claims

1. A communication method, wherein the method comprises:
receiving first information from a first network device to which a first cell belongs, wherein the first cell is a first serving cell of a terminal device in a first system and/or a first RAT, and the first information comprises configuration information used to determine whether inter-system and/or inter-RAT unnecessary handover occurs on the terminal device;
receiving at least one first measurement result from the terminal device, wherein the first measurement result is a measurement result of at least one cell in a second system and/or a second RAT; and
determining, based on the at least one first measurement result and all or a part of the first information, whether the inter-system and/or inter-RAT unnecessary handover occurs on the terminal device.

2. The method according to claim 1, wherein the method further comprises:
sending a first report if determining that the inter-system and/or inter-RAT unnecessary handover occurs on the terminal device, wherein the first report is an inter-system and/or inter-RAT unnecessary handover report, the first report comprises identification information of a second cell, and the second cell is a serving cell of the terminal device in the second system and/or the second RAT.

3. The method according to claim 2, wherein the method further comprises:
receiving the identification information of the second cell from the first network device or the terminal device.

4. The method according to claim 2 or 3, wherein the first report further comprises identification information of the first cell.

5. The method according to claim 4, wherein the method further comprises:
receiving the identification information of the first cell from the first network device or the terminal device.

6. The method according to any one of claims 1 to 5, wherein the first information comprises first threshold information and second measurement time information, the first threshold information indicates an inter-system and/or inter-RAT unnecessary handover determining threshold, and the second measurement time information indicates a time for measuring a cell in the second system and/or the second RAT.

7. The method according to claim 6, wherein the at least one first measurement result comprises one or more first measurement results comprising a measurement result of a fourth cell; and the determining, based on the at least one first measurement result and all or a part of the first information, that inter-system and/or inter-RAT unnecessary handover occurs on the terminal device comprises:
within a second measurement time indicated by the second measurement time information, when each of the measurement result of the fourth cell in the one or more first measurement results is greater than or equal to a threshold indicated by the first threshold information, determining that the inter-system and/or inter-RAT unnecessary handover occurs on the terminal device.

8. The method according to claim 6, wherein the method further comprises:
receiving at least one second measurement result from the first network device, wherein the second measurement result is the measurement result of the at least one cell in the second system and/or the second RAT, the at least one first measurement result comprises one or more first measurement results comprising a measurement result of a fourth cell, the at least one second measurement result comprises one or more second measurement results comprising the measurement result of the fourth cell, and the determining, based on the at least one first measurement result and all or a part of the first information, that inter-system and/or inter-RAT unnecessary handover occurs on the terminal device comprises:
when each of the measurement result of the fourth cell in the one or more second measurement results is greater than or equal to a threshold indicated by the first threshold information, and within a second measurement time indicated by the second measurement time information, each of the measurement result of the fourth cell in the one or more first measurement results is greater than or equal to the threshold indicated by the first threshold information, determining that the inter-system and/or inter-RAT unnecessary handover occurs on the terminal device.

9. The method according to claim 8, wherein the first information further comprises first measurement configuration information, the first measurement configuration information is a configuration for measuring the cell in the second system and/or the second RAT, and the at least one second measurement result is obtained through measurement and reported based on the first measurement configuration information.

10. The method according to any one of claims 1 to 9, wherein the first information further comprises the first measurement configuration information, the first measurement configuration information is the configuration for measuring the cell in the second system and/or the second RAT, the at least one first measurement result is obtained through measurement and reported based on the first measurement configuration information, and the method further comprises:
sending the first measurement configuration information to the terminal device.

11. A communication method, wherein the method comprises:
receiving second information from a second network device to which a second cell belongs, wherein the second cell is a serving cell of a terminal device in a second system and/or a second RAT;
determining first information based on the second information, wherein the first information comprises configuration information used to determine whether inter-system and/or inter-RAT unnecessary handover occurs on the terminal device; and
sending the first information to a third network device to which a third cell belongs, wherein the third cell is a second serving cell of the terminal device in a first system and/or a first RAT.

12. The method according to claim 11, wherein the second information comprises first threshold information and first measurement time information, the first threshold information indicates an inter-system and/or inter-RAT unnecessary handover determining threshold, and the first measurement time information indicates a time for measuring a cell in the second system and/or the second RAT; and
correspondingly, the first information comprises the first threshold information and second measurement time information, the second measurement time information indicates a time for measuring the cell in the second system and/or the second RAT, and the second measurement time information is determined based on the first measurement time information.

13. The method according to claim 11 or 12, wherein the method further comprises:
receiving at least one second measurement result from the terminal device, wherein the second measurement result is a measurement result of at least one cell in the second system and/or the second RAT; and
sending the at least one second measurement result to the third network device.

14. The method according to claim 13, wherein the first information further comprises first measurement configuration information, the first measurement configuration information is a configuration for measuring the cell in the second system and/or the second RAT, the at least one second measurement result is obtained through measurement and reported based on the first measurement configuration information, and the method further comprises:
sending the first measurement configuration information to the terminal device.

15. The method according to any one of claims 11 to 14, wherein the first information further comprises the first measurement configuration information, the first measurement configuration information is the configuration for measuring the cell in the second system and/or the second RAT, the first measurement configuration information is used by the third network device to obtain at least one first measurement result from the terminal device, and the first measurement result is the measurement result of the at least one cell in the second system and/or the second RAT.

16. The method according to any one of claims 11 to 15, wherein the method further comprises:
sending measurement time information to the terminal device, wherein the measurement time information indicates a time for measuring the cell in the second system and/or the second RAT.

17. The method according to any one of claims 11 to 16, wherein the method further comprises:
sending indication information to the terminal device, wherein the indication information indicates the terminal device to report identification information of a first cell and/or identification information of the second cell, and the first cell is a first serving cell of the terminal device in the first system and/or the first RAT.

18. A communication apparatus, wherein the communication apparatus comprises a transceiver module and a processing module;
the transceiver module is configured to receive first information from a first network device to which a first cell belongs, wherein the first cell is a first serving cell of a terminal device in a first system and/or a first RAT, and the first information comprises configuration information used to determine whether inter-system and/or inter-RAT unnecessary handover occurs on the terminal device;
the transceiver module is further configured to receive at least one first measurement result from the terminal device, wherein the first measurement result is a measurement result of at least one cell in a second system and/or a second RAT; and
the processing module is configured to determine, based on the at least one first measurement result and all or a part of the first information, whether the inter-system and/or inter-RAT unnecessary handover occurs on the terminal device.

19. The communication apparatus according to claim 18, wherein
the transceiver module is further configured to: send a first report if determine that the inter-system and/or inter-RAT unnecessary handover occurs on the terminal device, wherein the first report is an inter-system and/or inter-RAT unnecessary handover report, the first report comprises identification information of a second cell, and the second cell is a serving cell of the terminal device in the second system and/or the second RAT.

20. The communication apparatus according to claim 19, wherein
the transceiver module is further configured to receive the identification information of the second cell from the first network device or the terminal device.

21. The communication apparatus according to claim 19 or 20, wherein the first report further comprises identification information of the first cell.

22. The communication apparatus according to claim 21, wherein
the transceiver module is further configured to receive the identification information of the first cell from the first network device or the terminal device.

23. The communication apparatus according to any one of claims 18 to 22, wherein the first information comprises first threshold information and second measurement time information, the first threshold information indicates an inter-system and/or inter-RAT unnecessary handover determining threshold, and the second measurement time information indicates a time for measuring a cell in the second system and/or the second RAT.

24. The communication apparatus according to claim 23, wherein the at least one first measurement result comprises one or more first measurement results comprising a measurement result of a fourth cell, and the processing module is specifically configured to:
within a second measurement time indicated by the second measurement time information, when each of the measurement result of the fourth cell in the one or more first measurement results is greater than or equal to a threshold indicated by the first threshold information, determine that the inter-system and/or inter-RAT unnecessary handover occurs on the terminal device.

25. The communication apparatus according to claim 23, wherein
the transceiver module is further configured to receive at least one second measurement result from the first network device, wherein the second measurement result is the measurement result of the at least one cell in the second system and/or the second RAT, the at least one first measurement result comprises one or more first measurement results comprising a measurement result of a fourth cell, the at least one second measurement result comprises one or more second measurement results comprising the measurement result of the fourth cell, and the processing module is specifically configured to:
when each of the measurement result of the fourth cell in the one or more second measurement results is greater than or equal to a threshold indicated by the first threshold information, and within a second measurement time indicated by the second measurement time information, each of the measurement result of the fourth cell in the one or more first measurement results greater than or equal to the threshold indicated by the first threshold information, determine that the inter-system and/or inter-RAT unnecessary handover occurs on the terminal device.

26. The communication apparatus according to claim 25, wherein the first information further comprises first measurement configuration information, the first measurement configuration information is a configuration for measuring the cell in the second system and/or the second RAT, and the at least one second measurement result is obtained through measurement and reported based on the first measurement configuration information.

27. The communication apparatus according to any one of claims 18 to 26, wherein the first information further comprises the first measurement configuration information, the first measurement configuration information is the configuration for measuring the cell in the second system and/or the second RAT, and the at least one first measurement result is obtained through measurement and reported based on the first measurement configuration information; and
the transceiver module is further configured to send the first measurement configuration information to the terminal device.

28. A communication apparatus, wherein the communication apparatus comprises a processing module and a transceiver module;
the transceiver module is configured to receive second information from a second network device to which a second cell belongs, wherein the second cell is a serving cell of a terminal device in a second system and/or a second RAT;
the processing module is configured to determine first information based on the second information, wherein the first information comprises configuration information used to determine whether inter-system and/or inter-RAT unnecessary handover occurs on the terminal device; and
the transceiver module is further configured to send the first information to a third network device to which a third cell belongs, wherein the third cell is a second serving cell of the terminal device in a first system and/or a first RAT.

29. The communication apparatus according to claim 28, wherein the first information comprises first threshold information and second measurement time information, the first threshold information indicates an inter-system and/or inter-RAT unnecessary handover determining threshold, and the second measurement time information indicates a time for measuring a cell in the second system and/or the second RAT.

30. The communication apparatus according to claim 28 or 29, wherein
the transceiver module is further configured to receive at least one second measurement result from the terminal device, wherein the second measurement result is a measurement result of at least one cell in the second system and/or the second RAT; and
send the at least one second measurement result to the third network device.

31. The communication apparatus according to claim 30, wherein the first information further comprises first measurement configuration information, the first measurement configuration information is a configuration for measuring the cell in the second system and/or the second RAT, and the at least one second measurement result is obtained through measurement and reported based on the first measurement configuration information; and
the transceiver module is further configured to send the first measurement configuration information to the terminal device.

32. The communication apparatus according to any one of claims 28 to 31, wherein the first information further comprises the first measurement configuration information, the first measurement configuration information is the configuration for measuring the cell in the second system and/or the second RAT, the first measurement configuration information is used by the third network device to obtain at least one first measurement result from the terminal device, and the first measurement result is the measurement result of the at least one cell in the second system and/or the second RAT.

33. The communication apparatus according to any one of claims 28 to 32, wherein
the transceiver module is further configured to send measurement time information to the terminal device, wherein the measurement time information indicates a time for measuring the cell in the second system and/or the second RAT.

34. The communication apparatus according to any one of claims 28 to 33, wherein
the transceiver module is further configured to send indication information to the terminal device, wherein the indication information indicates the terminal device to report identification information of a first cell and/or identification information of the second cell, and the first cell is a first serving cell of the terminal device in the first system and/or the first RAT.

35. A communication apparatus, comprising a module configured to perform the method according to any one of claims 1 to 10, or comprising a module configured to perform the method according to any one of claims 11 to 17.

36. A computer-readable storage medium, comprising instructions, wherein when the instructions are run on a communication apparatus, the communication apparatus is enabled to perform the method according to any one of claims 1 to 10, or the communication apparatus is enabled to perform the method according to any one of claims 11 to 17.

37. A communication apparatus, comprising a computer program product, wherein the computer program product comprises instructions, when the instructions are run on the communication apparatus, the communication apparatus is enabled to perform the method according to any one of claims 1 to 10, or the communication apparatus is enabled to perform the method according to any one of claims 11 to 17.

38. A communication system, wherein the communication system comprises a first network device to which a first cell belongs and a third network device to which a third cell belongs, the first cell is a first serving cell of a terminal device in a first system and/or a first RAT, and the third cell is a second serving cell of the terminal device in the first system and/or the first RAT; and
the third network device is configured to perform the method according to any one of claims 1 to 10, and the first network device is configured to perform the method according to any one of claims 11 to 17.

39. The communication system according to claim 38, wherein the communication system further comprises a second network device to which a second cell belongs, the second cell is a serving cell of the terminal device in a second system and/or a second RAT; and the second network device is configured to interact with the third network device, to implement the method according to any one of claims 1 to 10; or the second network device is configured to interact with the first network device, to implement the method according to any one of claims 11 to 17.
